# EUROPEAN PATENT APPLICATION

(11) **EP 3 846 555 A1**
(43) Date of publication of application: **07.07.2021**
(21) Application number: 19864069.0
(22) Date of filing: 21.09.2019
(51) Int. Cl.: H04W 60/04

(54) **COMMUNICATION METHOD, RELATED DEVICE, AND COMPUTER STORAGE MEDIUM**

(30) Priority: 29.09.2018 CN 201811151009
(71) Applicant: HUAWEI TECHNOLOGIES CO., LTD., Shenzhen, Guangdong 518129 (CN)
(72) Inventor: JIN, Yinghao, Shenzhen, Guangdong 518129 (CN); YANG, Chenchen, Shenzhen, Guangdong 518129 (CN); TAN, Wei, Shenzhen, Guangdong 518129 (CN); HAN, Feng, Shenzhen, Guangdong 518129 (CN)
(74) Representative: Isarpatent
(86) International application number: PCT/CN2019/107141
(87) International publication number: WO 2020/063497

(57) **Abstract**

This application discloses a communication method, a related device, and a computer storage medium. The method includes: receiving, by a core network node, a first message, where the first message includes orbit information of a satellite node; and determining, by the core network node, first area identity list information based on the orbit information, and sending the first area identity list information to a terminal, where the first area identity list information includes at least one first area identity, and the first area identity is used for access or mobility management of the terminal. This application helps the core network node perform access or mobility management on the terminal and track a location of the terminal. This implements non-terrestrial communication.

## Description

### TECHNICAL FIELD

This application relates to the field of communications technologies, and in particular, to a communication method, a related device, and a computer storage medium.

### BACKGROUND

Currently, for terrestrial communication, a network side needs to be capable of tracking a location of a terminal, so that when downlink data of the terminal arrives, the network side can find the terminal in time, establish a connection to the terminal, and further send the downlink data to the terminal. If a user is in a connected mode, because the terminal and the network side are connected, the network side can know a location of the user in real time, that is, the network side can know a specific cell in which the user is currently located. Unless otherwise specified, the connected mode herein refers to a radio resource control (Radio Resource Control, RRC for short) connected (RRC Connected) mode. If the user is in an idle mode, because there is no RRC connection between a radio access network (Radio Access Network, RAN for short) and the user, the network side cannot track a specific location of the terminal in real time, that is, cannot know a specific cell in which the user is currently located.

To track the location of the terminal in an idle mode, the network side allocates a specific area to each user of the terminal when the user accesses a network, so that the network side can learn that the UE in an idle mode is in this area. For example, when the user accesses the network, the network side allocates a registration area (Registration Area, RA for short) to the user. The registration area may include one or more tracking areas (Tracking Area, TA for short), and each tracking area is identified by a tracking area identity (Tracking Area identity, TAI for short). Each base station broadcasts a TAI supported by the base station, so that after receiving the TAI broadcast by the base station, the terminal can compare the broadcast TAI with a TAI list included in an RA that is allocated by the network side to the terminal. When the TAI broadcast by the current base station is not in the allocated TAI list, a tracking area update procedure or a registration area update procedure is triggered. In the update procedure, the network side may allocate a new tracking area list to the terminal. In this way, the network side can track the location of the terminal. If downlink data arrives, the network side only needs to page the terminal in the TAI list corresponding to the terminal, to find the terminal.

However, this manner is applicable only to terrestrial communication. For the terrestrial communication, once a base station is deployed, a coverage area of the base station relative to the ground does not change. Therefore, if a terminal does not move, it may be considered that a TAI broadcast by the base station to the terminal remains unchanged. However, for non-terrestrial communication, as a satellite moves, a coverage area of the satellite is time-varying relative to the ground. As a result, the foregoing manner cannot be applied to the non-terrestrial communication.

### SUMMARY

Embodiments of the present invention provide a communication method, a related device, and a computer storage medium, to help a core network node perform access or mobility management on a terminal and track a location of the terminal. This implements non-terrestrial communication.

According to a first aspect, an embodiment of the present invention provides a communication method, including: A core network node receives a first message. The first message includes orbit information of a satellite node. The core network node determines first area identity list information based on the orbit information, and sends the first area identity list information to a terminal. The first area identity list information includes at least one first area identity, and the first area identity is used for access or mobility management of the terminal. This helps the core network node perform access or mobility management on the terminal and track a location of the terminal. This implements non-terrestrial communication.

In a possible design, the first message is a first interface setup message or a first configuration update message.

In a possible design, the core network node may further feed back a response message for the first message. Optionally, the response message for the first message is a first interface setup response message or a first configuration update response message, and is specifically an interface setup response message for the first message such as the first interface setup message or a configuration update response message for the first message such as the first configuration update message.

In a possible design, the method further includes: When downlink data for the terminal arrives, the core network node pages the terminal based on the first area identity list information. This implements paging of a terminal in non-terrestrial communication.

In a possible design, the orbit information includes any one or more of coverage capability information, time information, and orbit information. The coverage capability information includes any one or more of a transmit power, an antenna tilt, a coverage radius, and geographical coverage information on the surface of the earth at different time points. The time information may include time required for orbiting the earth for one circle. The orbit information may include an orbit height.

In a possible design, the first area identity list information may further include time period information corresponding to the at least one first area identity. The time period information may be used to indicate a valid time period of each of the at least one first area identity. This implements access or mobility management of the terminal based on the at least one first area identity and the time period information corresponding to the at least one first area identity.

In a possible design, the time period information corresponding to the at least one first area identity includes at least one group of time period information. The at least one group of time period information includes a start time point and an end time point. Alternatively, the time period information corresponding to the at least one first area identity includes timer information corresponding to the valid time period of each first area identity. This implements access or mobility management of the terminal based on the at least one first area identity and the at least one group of time period information (or a timer information).

In a possible design, the satellite node is a distributed unit. That the core network node receives the first message includes: The core network node receives the first message sent by a ground receiving station. The first message is sent after the ground receiving station receives a second message that carries the orbit information and that is sent by the satellite node. The ground receiving station has a function of a central unit. Optionally, that the core network node feeds back the response message for the first message includes: The core network node sends the response message for the first message to the ground receiving station.

In a possible design, the second message may be a second interface setup message or a second configuration update message. Optionally, the ground receiving station may further send a response message for the second message to the satellite node. The response message for the second message may be a second interface setup response message or a second configuration update response message, and is specifically an interface setup response message for the second message such as the second interface setup message or a configuration update response message for the second message such as the second configuration update message.

In a possible design, the satellite node is configured with a full base station function. That the core network node receives the first message includes: The core network node receives the first message sent by the satellite node. Optionally, that the core network node feeds back the response message for the first message includes: The core network node sends the response message for the first message to the satellite node.

In a possible design, the first message may further include cell-type information. The cell-type information may be used to indicate that the first message is used for access or mobility management of the terminal, and the access or mobility management is cell-specific access or mobility management, where the cell is covered by a satellite.

According to a second aspect, this application further provides a communication method, including: A satellite node generates a first message or a second message, and sends the first message or the second message. The first message or the second message includes orbit information of the satellite node. This helps a core network node perform access or mobility management on a terminal and track a location of the terminal. This implements non-terrestrial communication.

In a possible design, the first message is a first interface setup message or a first configuration update message, and the second message is a second interface setup message or a second configuration update message.

In a possible design, the satellite node may further receive a response message for the first message or a response message for the second message. Optionally, the response message is an interface setup response message or a configuration update response message, and is specifically an interface setup response message for the first message such as the first interface setup message or a configuration update response message for the first message such as the first configuration update message; or is specifically an interface setup response message for the second message such as the second interface setup message, or a configuration update response message for the second message such as the second configuration update message.

In a possible design, the satellite node is a distributed unit. That the satellite node sends the first message or the second message includes: The satellite node sends the second message to a ground receiving station. The second message includes the orbit information, so that the ground receiving station sends, to the core network node, the first message that carries the orbit information. Optionally, that the satellite node receives the response message for the first message or the response message for the second message includes: The satellite node receives the response message that is for the second message and that is sent by the ground receiving station. The response message for the second message may be specifically the interface setup response message for the second message such as the second interface setup message, or the configuration update response message for the second message such as the second configuration update message.

In a possible design, the satellite node is configured with a full base station function. That the satellite node sends the first message or the second message includes: The satellite node sends the first message to the core network node. The first message includes the orbit information. Optionally, that the satellite node receives the response message for the first message or the response message for the second message includes: The satellite node receives the response message that is for the first message and that is sent by the core network node.

In a possible design, the orbit information may include any one or more of coverage capability information, time information, and orbit information. The coverage capability information may include any one or more of a transmit power, an antenna tilt, a coverage radius, and geographical coverage information on the surface of the earth at different time points. The time information includes time required for orbiting the earth for one circle. The orbit information includes an orbit height.

According to a third aspect, this application further provides a communication method, including: A terminal receives first area identity list information sent by a core network node. The terminal triggers an area update procedure based on the first area identity list information and an area identity that is broadcast by a satellite node and that is received by the terminal. This helps the core network node perform access or mobility management on the terminal and track a location of the terminal. This implements non-terrestrial communication.

The first area identity list information includes at least one first area identity, the at least one first area identity is determined based on orbit information of the satellite node, and the first area identity is used for access or mobility management of the terminal.

In a possible design, the orbit information includes any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

In a possible design, the first area identity list information further includes time period information corresponding to the at least one first area identity. The time period information is used to indicate a valid time period of each of the at least one first area identity. This implements access or mobility management of the terminal based on the at least one first area identity and the time period information corresponding to the at least one first area identity.

In a possible design, the time period information corresponding to the at least one first area identity includes at least one group of time period information, and the at least one group of time period information includes a start time point and an end time point. Alternatively, the time period information corresponding to the at least one first area identity includes a timer information corresponding to the valid time period of each first area identity, and the timer starts at a start time point of the valid time period and stops at an end time point of the valid time period. This implements access or mobility management of the terminal based on the at least one first area identity and the at least one group of time period information (or the timer).

In a possible design, that the terminal triggers the area update procedure based on the first area identity list information and the area identity that is broadcast by the satellite node and that is received by the terminal includes: The terminal receives a broadcast message from the satellite node. The broadcast message includes an area identity of the satellite node. When the area identity of the satellite node is different from the at least one first area identity included in the first area identity list information, the terminal sends an update message to the core network node. The update message is used to indicate that the terminal moves out of an area corresponding to the first area identity list information. Therefore, access or mobility management can be implemented based on the at least one first area identity.

In a possible design, that the terminal triggers the area update procedure based on the first area identity list information and the area identity that is broadcast by the satellite node and that is received by the terminal includes: The terminal receives a broadcast message from the satellite node. The broadcast message includes an area identity of the satellite node. When the area identity of the satellite node is different from a second area identity, the terminal sends an update message to the core network node. The second area identity is a first area identity that corresponds to time period information matching a current system time and that is in the at least one first area identity. Alternatively, the second area identity is a first area identity that is in the at least one first area identity and whose timer is started. The update message is used to indicate that the terminal moves out of a tracking area corresponding to the first area identity list information. Therefore, access or mobility management of the terminal can be implemented for the terminal based on the at least one first area identity and the at least one group of time period information (or the timer).

According to a fourth aspect, an embodiment of the present invention provides a communication method, including: A core network node receives a first message. The first message includes each piece of coverage information of a satellite node and an area identity corresponding to each piece of coverage information. The core network node determines first area identity list information based on each piece of coverage information and the area identity corresponding to each piece of coverage information, and sends the first area identity list information to a terminal. The first area identity list information includes at least one first area identity, and the first area identity may be used for access or mobility management of the terminal. This helps the core network node perform access or mobility management on the terminal and track a location of the terminal. This implements non-terrestrial communication.

In a possible design, the first message is a first interface setup message or a first configuration update message.

In a possible design, the core network node may further feed back a response message for the first message. Optionally, the response message for the first message is a first interface setup response message or a first configuration update response message, and is specifically an interface setup response message for the first message such as the first interface setup message or a configuration update response message for the first message such as the first configuration update message.

In a possible design, the method further includes: When downlink data for the terminal arrives, the core network node pages the terminal based on the first area identity list information. This implements paging of a terminal in non-terrestrial communication.

In a possible design, the coverage information may include any one or more of an orbit identifier, a time period, and a coverage area. In other words, the first message may include corresponding area identities broadcast by the satellite node in different orbits, different time periods, or different coverage areas. Area identities broadcast by the satellite node in different orbits, different time periods, or different coverage areas are different.

In a possible design, the first message may further include orbit information of the satellite node. The orbit information may include any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

In a possible design, the first area identity list information further includes time period information corresponding to the at least one first area identity. The time period information is used to indicate a valid time period of each of the at least one first area identity. This implements access or mobility management of the terminal based on the at least one first area identity and the time period information corresponding to the at least one first area identity.

In a possible design, the time period information corresponding to the at least one first area identity includes at least one group of time period information, and the at least one group of time period information includes a start time point and an end time point. Alternatively, the time period information corresponding to the at least one first area identity includes a timer information corresponding to the valid time period of each first area identity, and the timer starts at a start time point of the valid time period and stops at an end time point of the valid time period. This implements access or mobility management of the terminal based on the at least one first area identity and the at least one group of time period information (or the timer).

In a possible design, the satellite node is a distributed unit. That the core network node receives the first message includes: The core network node receives the first message sent by a ground receiving station. The first message is sent by the ground receiving station after receiving a second message that is sent by the satellite node and that carries each piece of coverage information and the area identity corresponding to each piece of coverage information. Optionally, that the core network node feeds back the response message for the first message includes: The core network node sends the response message for the first message to the ground receiving station.

In a possible design, the second message may be a second interface setup message or a second configuration update message. Optionally, the ground receiving station may further send a response message for the second message to the satellite node. The response message for the second message may be a second interface setup response message or a second configuration update response message, and is specifically an interface setup response message for the second message such as the second interface setup message or a configuration update response message for the second message such as the second configuration update message. Optionally, the second message may further include the orbit information.

In a possible design, the satellite node is configured with a full base station function. That the core network node receives the first message includes: The core network node receives the first message sent by the satellite node. Optionally, that the core network node feeds back the response message for the first message includes: The core network node sends the response message for the first message to the satellite node.

In a possible design, the first message may further include cell-type information. The cell-type information may be used to indicate that the first message is used for access or mobility management of the terminal, and the access or mobility management is cell-specific access or mobility management, where the cell is covered by a satellite.

According to a fifth aspect, this application further provides a communication method, including: A satellite node generates a first message or a second message, and sends the first message or the second message. The first message or the second message includes orbit information of the satellite node. This helps a core network node perform access or mobility management on a terminal and track a location of the terminal. This implements non-terrestrial communication.

In a possible design, the first message or the second message includes each piece of coverage information of the satellite node and an area identity corresponding to each piece of coverage information. The first message may be a first interface setup message or a first configuration update message, and the second message may be a second interface setup message or a second configuration update message.

In a possible design, the satellite node may further receive a response message for the first message or a response message for the second message. Optionally, the response message is an interface setup response message or a configuration update response message, and is specifically an interface setup response message for the first message such as the first interface setup message or a configuration update response message for the first message such as the first configuration update message; or is specifically an interface setup response message for the second message such as the second interface setup message, or a configuration update response message for the second message such as the second configuration update message.

In a possible design, the first message and/or the second message may further include the orbit information of the satellite node. The orbit information may include any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

In a possible design, the satellite node is a distributed unit. That the satellite node sends the first message or the second message includes: The satellite node sends the second message to a ground receiving station. The second message includes each piece of coverage information of the satellite node and the area identity corresponding to each piece of coverage information, so that the ground receiving station sends, to the core network node, the first message that carries each piece of coverage information and the area identity corresponding to each piece of coverage information. The ground receiving station has a function of a central unit. Optionally, that the satellite node receives the response message for the first message or the response message for the second message includes: The satellite node receives the response message that is for the second message and that is sent by the ground receiving station. The response message for the second message may be specifically the interface setup response message for the second message such as the second interface setup message, or the configuration update response message for the second message such as the second configuration update message.

In a possible design, the satellite node is configured with a full base station function. That the satellite node sends the first message or the second message includes: The satellite node sends the first message to the core network node. The first message includes each piece of coverage information of the satellite node and the area identity corresponding to each piece of coverage information. Optionally, that the satellite node receives the response message for the first message or the response message for the second message includes: The satellite node receives the response message that is for the first message and that is sent by the core network node.

In a possible design, the coverage information may include any one or more of an orbit identifier, a time period, and a coverage area. In other words, the first message may include corresponding area identities broadcast by the satellite node in different orbits, different time periods, or different coverage areas. Area identities corresponding to the satellite node in different orbits, different time periods, or different coverage areas are different.

In a possible design, the first message and/or the second message may further include the orbit information of the satellite node. The orbit information may include any one or more of the coverage capability information, the time information, and the orbit information. The coverage capability information includes any one or more of the transmit power, the antenna tilt, the coverage radius, and the geographical coverage information on the surface of the earth at different time points. The time information includes time required for orbiting the earth for one circle. The orbit information includes the orbit height.

According to a sixth aspect, this application further provides a communication method, including: A terminal receives first area identity list information sent by a core network node. The terminal triggers an area update procedure based on the first area identity list information and an area identity that is broadcast by a satellite node and that is received by the terminal. This helps the core network node perform access or mobility management on the terminal and track a location of the terminal. This implements non-terrestrial communication.

The first area identity list information includes at least one first area identity. The at least one first area identity is determined based on each piece of coverage information of the satellite node and an area identity corresponding to each piece of coverage information. The first area identity is used for access or mobility management of the terminal.

In a possible design, the coverage information may include any one or more of an orbit identifier, a time period, and a coverage area. In other words, the first message may include corresponding area identities broadcast by the satellite node in different orbits, different time periods, or different coverage areas. Area identities corresponding to the satellite node in different orbits, different time periods, or different coverage areas are different.

In a possible design, the at least one first area identity may alternatively be determined based on orbit information of the satellite node. The orbit information may include any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

In a possible design, the first area identity list information further includes time period information corresponding to the at least one first area identity. The time period information is used to indicate a valid time period of each of the at least one first area identity. This implements access or mobility management of the terminal based on the at least one first area identity and the time period information corresponding to the at least one first area identity.

In a possible design, the time period information corresponding to the at least one first area identity includes at least one group of time period information, and the at least one group of time period information includes a start time point and an end time point. Alternatively, the time period information corresponding to the at least one first area identity includes a timer information corresponding to the valid time period of each first area identity, and the timer starts at a start time point of the valid time period and stops at an end time point of the valid time period. This implements access or mobility management of the terminal based on the at least one first area identity and the at least one group of time period information (or the timer).

In a possible design, that the terminal triggers the area update procedure based on the first area identity list information and the area identity that is broadcast by the satellite node and that is received by the terminal includes: The terminal receives a broadcast message from the satellite node. The broadcast message includes an area identity of the satellite node. When the area identity of the satellite node is different from the at least one first area identity included in the first area identity list information, the terminal sends an update message to the core network node. The update message is used to indicate that the terminal moves out of a tracking area corresponding to the first area identity list information. Therefore, access or mobility management can be implemented based on the at least one first area identity.

In a possible design, that the terminal triggers the area update procedure based on the first area identity list information and the area identity that is broadcast by the satellite node and that is received by the terminal includes: The terminal receives a broadcast message from the satellite node. The broadcast message includes an area identity of the satellite node. When the area identity of the satellite node is different from a second area identity, the terminal sends an update message to the core network node. The second area identity is a first area identity that corresponds to time period information matching a current system time and that is in the at least one first area identity. Alternatively, the second area identity is a first area identity that is in the at least one first area identity and whose timer is started. The update message is used to indicate that the terminal moves out of a tracking area corresponding to the first area identity list information. Therefore, access or mobility management of the terminal can be implemented for the terminal based on the at least one first area identity and the at least one group of time period information (or the timer).

According to a seventh aspect, this application further provides a core network node, including units or means (means) used to perform the steps of the methods/method in the first aspect and/or the fourth aspect. The core network node may be an access and mobility management function network element, or may be at least one processing element or a chip.

According to an eighth aspect, this application further provides a core network node, including a transceiver, a memory, and a processor. The processor is coupled to the memory and the transceiver. The memory is configured to store a program. The processor invokes the program stored in the memory, to perform the methods/method in the first aspect and/or the fourth aspect. The transceiver is configured to receive and/or send a message. The core network node may be an access and mobility management function network element, or may be at least one processing element or a chip.

According to a ninth aspect, this application further provides a satellite node, including units or means (means) used to perform the steps of the methods/method in the second aspect and/or the fifth aspect. The satellite node may be a satellite, or may be at least one processing element or a chip.

According to a tenth aspect, this application further provides a satellite node, including a transceiver, a memory, and a processor. The processor is coupled to the memory and the transceiver. The memory is configured to store a program. The processor invokes the program stored in the memory, to perform the methods/method in the second aspect and/or the fifth aspect. The transceiver is configured to receive and/or send a message. The satellite node may be a satellite, or may be at least one processing element or a chip.

According to an eleventh aspect, this application further provides a terminal, including units or means (means) used to perform the steps of the methods/method in the third aspect and/or the sixth aspect. The terminal may be a communications device that has a satellite communication function, or may be at least one processing element or a chip.

According to a twelfth aspect, this application further provides a terminal, including a transceiver, a memory, and a processor. The processor is coupled to the memory and the transceiver. The memory is configured to store a program. The processor invokes the program stored in the memory, to perform the methods/method in the third aspect and/or the sixth aspect. The transceiver is configured to receive and/or send a message. The terminal may be a communications device that has a satellite communication function, or may be at least one processing element or a chip.

According to a thirteenth aspect, this application further provides a communications system. The system includes the core network node, the satellite node, and/or the terminal in the foregoing aspects.

In another possible design, the system further includes another device, in the solutions provided in embodiments of the present invention, that interacts with the core network node, the satellite node, and/or the terminal.

According to a fourteenth aspect, a computer storage medium is provided. The computer storage medium is configured to store a computer software instruction used by the foregoing core network node. The computer software instruction includes a program designed for executing the first aspect and/or the fourth aspect. Alternatively, the computer storage medium stores a computer program, and the computer program includes a program instruction. When the program instruction is executed by a processor, the processor is enabled to perform some or all of the steps in the first aspect and/or the fourth aspect.

According to a fifteenth aspect, a computer storage medium is provided. The computer storage medium is configured to store a computer software instruction used by the foregoing satellite node. The computer software instruction includes a program designed for executing the second aspect and/or the fifth aspect. Alternatively, the computer storage medium stores a computer program, and the computer program includes a program instruction. When the program instruction is executed by a processor, the processor is enabled to perform some or all of the steps in the second aspect and/or the fifth aspect.

According to a sixteenth aspect, a computer storage medium is provided. The computer storage medium is configured to store a computer software instruction used by the foregoing terminal. The computer software instruction includes a program designed for executing the third aspect and/or the sixth aspect. Alternatively, the computer storage medium stores a computer program, and the computer program includes a program instruction. When the program instruction is executed by a processor, the processor is enabled to perform some or all of the steps in the third aspect and/or the sixth aspect.

According to a seventeenth aspect, a computer program product including an instruction is further provided. When the computer program product runs on a computer, the computer is enabled to perform the method according to the first aspect and/or the fourth aspect.

According to an eighteenth aspect, a computer program product including an instruction is further provided. When the computer program product runs on a computer, the computer is enabled to perform the method according to the second aspect and/or the fifth aspect.

According to a nineteenth aspect, a computer program product including an instruction is further provided. When the computer program product runs on a computer, the computer is enabled to perform the method according to the third aspect and/or the sixth aspect.

According to a twentieth aspect, a chip system is provided. The chip system includes a processor, configured to implement functions in the foregoing aspects for a core network node, for example, obtain or process data and/or information in the foregoing methods. In a possible design, the chip system further includes a memory. The memory is configured to store a program instruction and data that are necessary for the core network node. The chip system may include a chip, or may include a chip and another discrete component.

According to a twenty-first aspect, a chip system is provided. The chip system includes a processor, configured to implement functions in the foregoing aspects for a satellite node, for example, obtain or process data and/or information in the foregoing methods. In a possible design, the chip system further includes a memory. The memory is configured to store a program instruction and data that are necessary for the satellite node. The chip system may include a chip, or may include a chip and another discrete component.

According to a twenty-second aspect, a chip system is provided. The chip system includes a processor, configured to implement functions in the foregoing aspects for a terminal, for example, obtain or process data and/or information in the foregoing methods. In a possible design, the chip system further includes a memory. The memory is configured to store a program instruction and data that are necessary for the terminal. The chip system may include a chip, or may include a chip and another discrete component.

In the solution provided in the embodiments of the present invention, the core network node can receive the orbit information of the satellite node, further determine, based on the orbit information, the identity list information including the at least one first area identity, and then send the identity list information to the terminal. This helps the core network node perform access or mobility management on the terminal based on the orbit information of the satellite node, and track a location of the terminal. This implements non-terrestrial communication.

### BRIEF DESCRIPTION OF DRAWINGS

To describe the technical solutions in the embodiments of the present invention or the solution described in the BACKGROUND more clearly, the following describes the accompanying drawings in the embodiments of the present invention or the BACKGROUND.
FIG. 1a is an architectural diagram of a communications system;
FIG. 1b is an architectural diagram of another communications system;
FIG. 1c is an architectural diagram of still another communications system;
FIG. 1d is an architectural diagram of still yet another communications system;
FIG. 2 is an architectural diagram of a radio access network;
FIG. 3 is a schematic diagram of a movement scenario of a satellite node according to an embodiment of the present invention;
FIG. 4 is a schematic interaction diagram of a communication method according to an embodiment of the present invention;
FIG. 5 is a schematic interaction diagram of another communication method according to an embodiment of the present invention;
FIG. 6 is a schematic interaction diagram of still another communication method according to an embodiment of the present invention;
FIG. 7 is a schematic interaction diagram of still yet another communication method according to an embodiment of the present invention;
FIG. 8 is a schematic structural diagram of a core network node according to an embodiment of the present invention;
FIG. 9 is a schematic structural diagram of another core network node according to an embodiment of the present invention;
FIG. 10 is a schematic structural diagram of a satellite node according to an embodiment of the present invention;
FIG. 11 is a schematic structural diagram of another satellite node according to an embodiment of the present invention;
FIG. 12 is a schematic structural diagram of a terminal according to an embodiment of the present invention; and
FIG. 13 is a schematic structural diagram of another terminal according to an embodiment of the present invention.

### DESCRIPTION OF EMBODIMENTS

The following describes embodiments of the present invention with reference to the accompanying drawings in the embodiments of the present invention.

The technical solutions of this application may be applied to a non-terrestrial network (Non Terrestrial Network, NTN for short) system, that is, applied to a system in which communication is performed by using a satellite node (satellite). The satellite node may perform communication by using a 3GPP standard.

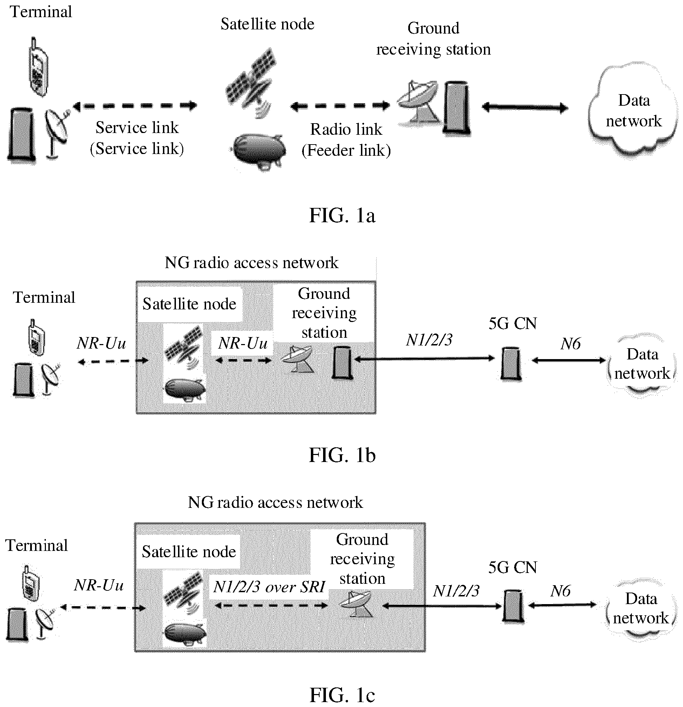

FIG. 1a is an architectural diagram of a communications system according to this application. As shown in FIG. 1a, the communications system includes a terminal, a satellite node, and a ground receiving station (referred to as a "ground station" for short). Wireless communication exists between the terminal and the satellite node. The terminal may send data to the satellite node over a link between the terminal and the satellite node, for example, send the data to the satellite node over a service link (service link). After receiving the data, the satellite node may send the data to the ground receiving station over a link between the satellite node and the ground receiving station, for example, transmit the data to the ground receiving station over a radio link (for example, a feeder link). After receiving the data from the satellite node, the ground receiving station transmits the data to a core network (data network), and then the data is processed through the core network. For example, data interaction is performed with another terminal. It may be understood that the service link and the feeder link herein respectively refer to the link between the terminal and the satellite node and the link between the satellite and the ground receiving station. In another possible embodiment, the link between the terminal and the satellite node and/or the link between the satellite node and the ground receiving station may alternatively be represented by another term. This is not limited in this application.

The terminal is a device having a communication function, and may include a handheld device having a wireless communication function, a vehicle-mounted device, a wearable device, a computing device, another processing device connected to a wireless modem, or the like. In different networks, the terminal may have different names, for example, a terminal device, user equipment (user equipment, UE for short), a mobile station, a subscriber unit, a station, a cellular phone, a personal digital assistant, a wireless modem, a wireless communications device, a handheld device, and a laptop computer, a cordless phone, a wireless local loop station, and the like. The terminal may be a wireless terminal or a wired terminal. The wireless terminal may be a device that provides a user with voice and/or data connectivity, the handheld device having a wireless connection function, or the another processing device connected to the wireless modem. The wireless terminal may communicate with one or more core networks through a radio access network (RAN, radio access network).

Satellite nodes may be classified into a low earth orbiting (Low Earth Orbiting, LEO for short) satellite, a medium earth orbiting (Medium Earth Orbiting, MEO for short) satellite, a geostationary earth orbiting (Geostationary Earth Orbiting, GEO for short) satellite, and the like. As the satellite node moves, coverages of the low earth orbiting satellite and the medium earth orbiting satellite change relative to the surface of the earth, and a coverage area of the geostationary earth orbiting satellite remains unchanged relative to the surface of the earth.

The ground receiving station may be a gateway, or may be a donor node having a base station function, for example, a base station such as a gNB having a full base station function (a base station configured with all base station functions), or a central unit (Central Unit, CU for short) having some base station functions. Examples of ground receiving station are not enumerated herein.

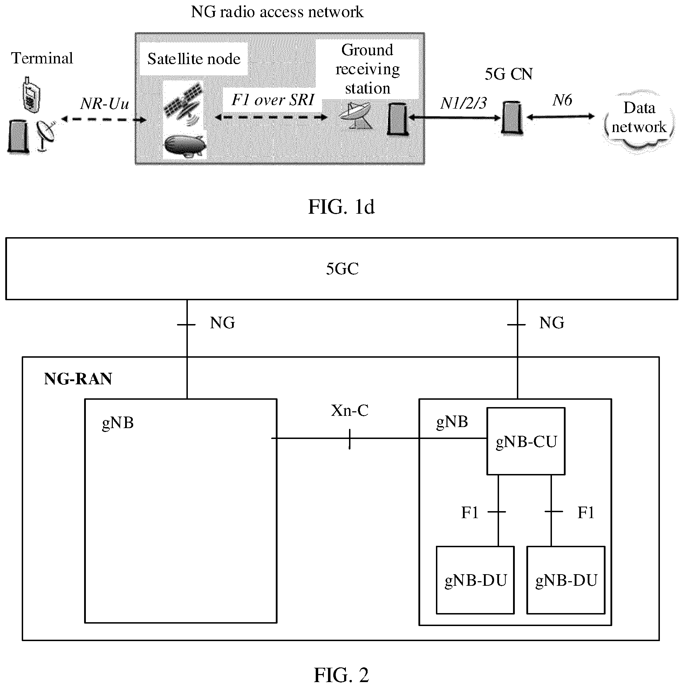

Optionally, a base station may have full base station functions, or may have separated parts of functions. For example, in the R15 standard, a new architecture is defined for a 5G new radio or a base station gNB in a new radio (new radio, NR for short) network. In other words, the gNB is divided into two parts based on protocol stack functions: a central unit (CU) and a distributed unit (Distributed Unit, DU for short). For example, FIG. 2 is an architectural diagram of a radio access network. The CU has some base station functions. For example, the CU may include protocol stack entities such as radio resource control (Radio Resource Control, RRC for short), a service data adaptation protocol (Service Data Adaptation Protocol, SDAP for short), and a packet data convergence protocol (Packet Data Convergence Protocol, PDCP for short). The DU has base station functions other than the functions of the CU. For example, the DU may include protocol stack entities such as radio link control (Radio Link Control, RLC for short), medium access control (Medium Access Control, MAC for short), and a port physical layer (Port Physical Layer, PHY for short). Further optionally, one base station such as a gNB may include one CU (a logical node) and a plurality of DUs (logical nodes). The CU may be connected to the DU through an F1 interface, the CU is connected to another gNB through an Xn interface, and the CU is connected to a 5G core network (5GC) through an NG interface. One CU may be connected to a plurality of DUs, and one DU is connected to only one CU. Alternatively, one CU may be connected to a plurality of DUs, and one DU may be connected to a plurality of CUs, to improve system stability.

Further optionally, there may be three types of satellite nodes. A satellite node of a first type is used only for forwarding. For the satellite node of the first type, a received terminal signal is amplified and then sent to a ground receiving station, and no processing is performed on the satellite node, as shown in FIG. 1b. The terminal may communicate with the satellite node through an NR-Uu interface. The satellite node may communicate with the ground receiving station (for example, may include an NTN radio remote unit (Remote Radio Unit, RRU for short) and the gNB) through an NR-Uu interface. The ground receiving station may communicate with the 5G core network (5G CN) through an N1/2/3 interface. The 5G CN may communicate with a data network through an N6 interface. A satellite node of a second type has a full base station processing function, and the satellite node is a base station for a terrestrial terminal. Communication between the satellite node and the terminal, as shown in FIG. 1c, is basically the same as normal 5G communication. The terminal may communicate with the satellite node through an NR-Uu interface. The satellite node may communicate with the ground receiving station through a satellite radio interface (Satellite Radio Interface, SRI for short). The SRI interface may be used to send an interface message (for example, an N2/N3 interface message) between the satellite node and the 5G CN. The ground receiving station may communicate with the 5G CN through an N1/2/3 interface. The 5G CN may communicate with a data network through an N6 interface. A satellite node of a third type has a DU processing function, and the satellite node is a DU for a terrestrial terminal. Communication between the satellite node and the terminal, as shown in FIG. 1d, is basically the same as communication between the terminal and a DU in a normal 5G terrestrial communications system. The terminal may communicate with the satellite node through an NR-Uu interface. The satellite node may communicate with the ground receiving station (for example, may include a gNB-CU) through an SRI interface. The SRI interface may be used to transmit an F1 interface message between the satellite node and the ground receiving station. The ground receiving station may communicate with the 5G CN through an N1/2/3 interface. The 5G CN may communicate with a data network through an N6 interface.

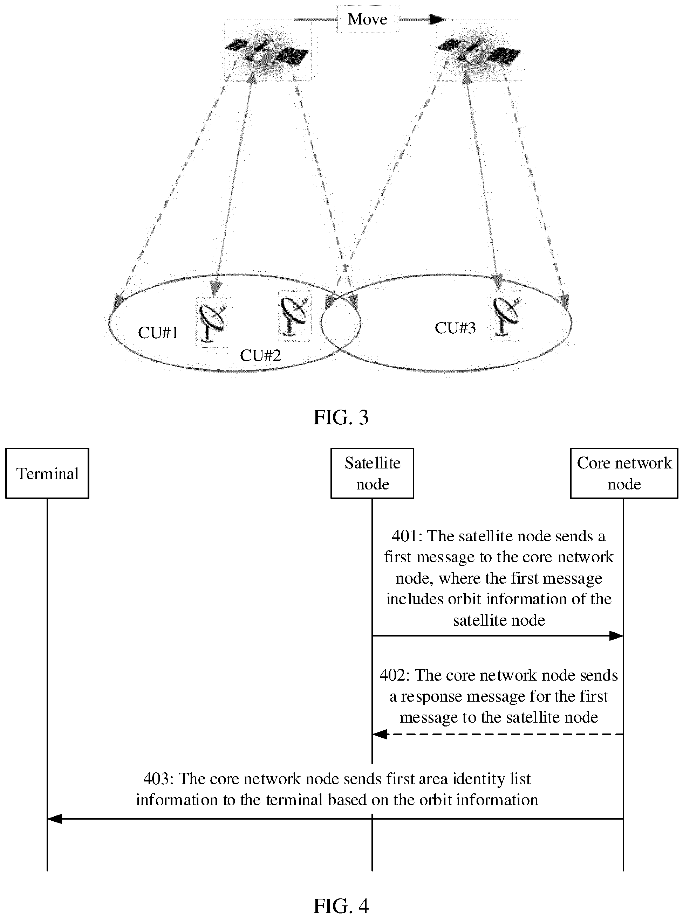

Non-terrestrial communication corresponding to the satellite node is different from conventional terrestrial communication because the satellite node moves. As shown in FIG. 3, it is assumed that the satellite node moves from a cell provided by a CU#1 to a cell provided by a CU#3. A beam of the satellite is time-varying relative to the ground, and a coverage area of a non-geostationary earth orbiting satellite is time-varying. Therefore, in a satellite communications system, how to track a current location of a terminal, that is, how to implement access or mobility management on the terminal, is critical to implement an operation such as paging (paging) of the terminal.

In this application, a core network node may be an access and mobility management function (Access and Mobility Management Function, AMF for short) network element in a 5G network, or may be a core network node in another network. This is not limited in this application.

This application discloses a communication method, a related device, and a computer storage medium, to help a core network node perform access or mobility management on a terminal based on orbit information of a satellite node, and track a location of the terminal. This implements non-terrestrial communication. Details are separately described below.

FIG. 4 is a schematic interaction diagram of a communication method according to an embodiment of the present invention. In this embodiment, a satellite node is configured with all base station functions. In other words, the satellite node has full base station functions. The communications system includes the satellite node, a core network node, and a terminal. For an architecture of the communications system, refer to FIG. 1a and FIG. 1c. Further, in this embodiment, an area identity (for example, a tracking area code (Tracking Area Code, TAC for short) or a tracking area identity (Tracking Area identity, TAI for short)) broadcast by the satellite node does not change with movement of the satellite node in a period of time. For example, when the core network node (for example, an AMF or an AMF set) connected to the satellite node does not change, the area identity broadcast by the satellite node does not change. In this period of time, for a stationary terminal, because a satellite node covering the user may change or a cell provided by the satellite node covering the user may change, an area identity that is broadcast by the satellite node and that is received by the terminal may be time-varying. It may be understood that the area identity herein may be used to perform access or mobility management on the terminal. The access or mobility management includes terminal paging by a network, and terminal area update, and may further include another function, for example, reachability management (Reachability management), connection management (Connection management), or registration management (Registration management). For example, a core network side allocates an area identity list to the user. For example, an area identity list is allocated to the user in a terminal registration process or an area update process. After receiving the area identity list, the user stores the identity list. The satellite node may broadcast an identifier in a form of broadcasting a corresponding area identity to each cell, or may broadcast a corresponding area identity to all serving cells, or may broadcast the area identity in another form. This is not limited herein. The user receives the area identity broadcast by the satellite node. If the user finds that the area identity broadcast by the satellite node is different from any area identity in the area identity list allocated by the core network, the user sends an update procedure to the core network, for example, sends an update message. The update message is used to notify the core network that the UE has moved out of an area corresponding to the previously allocated area identity list. It may be understood that the area identity may be a TAI, a TAC, or in another identifier form. This is not limited herein. Unless otherwise specified, the following uses an example in which the area identity is a TAI for description. As shown in FIG. 4, the method may include the following steps.

401: A satellite node sends a first message to the core network node, where the first message includes orbit information of the satellite node.

The first message may be an interface setup message or a configuration update message, namely, a first interface setup message or a first configuration update message. For example, the first interface setup message may be a next generation (Next Generation, NG for short) setup request (NG Setup Request) message, or a base station configuration update (for example, a RAN Configuration Update) message.

Optionally, the first message may further include a cell identifier of a cell served by the satellite node and a TAC or TAI, namely, an area identity broadcast by the satellite node, corresponding to the cell identifier.

Optionally, the orbit information may include any one or more of coverage capability information, time information, and orbit information. The coverage capability information may include any one or more of a transmit power, an antenna tilt, a coverage radius, and geographical coverage information (which may be represented by longitude and latitude, or may be represented in another manner) on the surface of the earth at different time points. The time information may include time required for orbiting the earth for one circle. The orbit information may include an orbit height, for example, a distance between a satellite orbit and the surface of the earth.

It may be understood that the first message may be sent by the satellite node to a ground receiving station, and then forwarded by the ground receiving station to the core network node.

402: The core network node sends a response message for the first message to the satellite node.

The core network node may receive the first message, and may feed back the response message for the first message. In this embodiment, after receiving the first message from the satellite node, the core network node may send the response message for the first message to the satellite node. The satellite node may receive the response message that is for the first message and that is sent by the core network node. Optionally, at least one (one or more) satellite node may send a respective first message to the core network node. For example, the at least one satellite node may send the first message when an orbit location is updated. The core network node may receive the first message sent by the at least one satellite node, and send a response message for the first message to each satellite node.

The response message for the first message may be an interface setup response message or a configuration update response message, and is specifically an interface setup response message for the first message such as the first interface setup message or a configuration update response message for the first message such as the first configuration update message. For example, when the first message is the NG setup request message, the response message for the first message may be an NG setup response (NG Setup Response) message. When the first message is the RAN configuration update message, the response message for the first message may be a RAN configuration update acknowledge (RAN Configuration Update Acknowledge) message.

It may be understood that the response message for the first message may be sent by the core network node to the ground receiving station, and forwarded by the ground receiving station to the satellite node.

It may be understood that step 402 is optional. In some embodiments, step 402 is not required. In other words, the core network node may not send the response message for the first message to the satellite node.

403: The core network node sends first area identity list information to the terminal based on the orbit information.

The first area identity list information includes at least one first area identity, and the first area identity may be used for access or mobility management of the terminal. A function of the first area identity is similar to that of a tracking area identity. The first area identity may be a tracking area identity, or may be a newly defined identifier. This is not limited in this application.

After receiving, from the at least one satellite node, the first message that carries the orbit information of the satellite node, the core network node may determine the at least one first area identity for the terminal from the orbit information of each satellite node, that is, determine the first area identity list information. Optionally, the core network node may obtain current location information of the terminal. After obtaining the location information of the terminal, the core network node may determine, based on the orbit information of the satellite node, a movement track of the satellite node or a track of a beam coverage area of the satellite node on the surface of the earth. Then, the core network node determines, based on the current location information (for example, a current serving satellite node and a current serving cell) of the terminal or a movement track of the terminal, satellite nodes that may serve the terminal, and then sends, to the terminal, the first area identity list information used to indicate these satellite nodes. For example, the core network node generates a TA list including TAIs corresponding to these satellite nodes, and sends the TA list to the terminal. For example, the core network node may send a registration accept message including the TA list to the terminal.

In some embodiments, the terminal may send a request message to the core network node. The core network node may receive the request message from the terminal, and send a response message for the request message to the terminal. Further optionally, during sending the first area identity list information to the terminal, the core network node may send the response message for the request message to the terminal, where the response message carries the first area identity list information. Specifically, after receiving the request message from the terminal, the core network node may determine to send the first area identity list information to the terminal based on the orbit information, and send the response message including the first area identity list information to the terminal.

The request message may be a registration area update request message, an attach request (Attach Request) message, a tracking area update message, a registration request (Registration Request) message, or the like. Examples of the request message are not enumerated herein. The response message for the request message may be a registration area update success (for example, RA Update Success or RA Update Accept) message, an attach success (for example, Attach Success or Attach Accept) message, a tracking area update success (for example, TA Update Success or TA Update Accept) message, a registration success (for example, Registration Success or Registration Accept) message, or the like. Examples of the response message for the request message are not enumerated herein. Optionally, the request message may carry the location information of the terminal.

Optionally, the first area identity list information may further include time period information corresponding to the at least one first area identity. The time period information may be used to indicate a valid time period of each of the at least one first area identity. For example, the core network node may further determine, based on the orbit information of each satellite node and the location information of the terminal, satellite nodes that may serve the terminal in a specific period of time, and then determine the first area identity list information. For example, the core network node generates a TA list including TAIs corresponding to the satellite nodes and the time period information, and sends the TA list to the terminal. For example, the TA list, namely, the TA identity list, may be in the following form:

### Example 1:

### TA identity list

> TAI
> Start time
> End time

It may be understood that the start time and the end time may be in a coordinated universal time (Coordinated Universal Time, UTC for short) form, or may be in another time form. For example, the start time and the end time may be in a periodicity of one day (24 hours), and represent a start time and an end time of each day, or may be in a periodicity of two days or three days. This is not limited herein.

It may be understood that a plurality of area identities may use a same time period. For example, the following identification manner may also be used:

### TA identity list

> Valid time
   > > Start Time
   > > End Time
> TA identity list
   > >TAI

Further, in an optional implementation, the time period information corresponding to the at least one first area identity may include at least one group of time period information. The at least one group of time period information includes a start time point (the start time) and an end time point (the end time). The at least one first area identity and the at least one group of time period information may be in a one-to-one correspondence, or may be in a one-to-many relationship, or may be in a many-to-one relationship. For example, the TA list includes a TAI 1 (1:00-1:30, 9:00-9:30, 17:00-17:30), a TAI 2 (14:00-16:30), and a TAI 3 (3:00-3:20, 9:00-9:20, 15:00-15:20, 21:00-21:20). It may indicate that valid time (period) of the TAI 1 is 1:00-1:30, 9:00-9:30, and 17:00-17:30. In other words, if a TAI that is broadcast by the satellite node and that is received by the terminal during time periods 1:00-1:30, 9:00-9:30 and 17:00-17:30 is the TAI 1, the terminal may not trigger an update procedure, so that the core network node updates a TA for the terminal. For example, the terminal may not trigger a TA update procedure, an RA update procedure, or an RA procedure. Valid time of the TAI 2 is 14:00-16:30. Valid time of the TAI 3 is 3:00-3:20, 9:00-9:20, 15:00-15:20, and 21:00-21:20. In this way, the core network node and the terminal can manage the location of the terminal based on the TA list. For example, the TA list may be in the following form:

### Example 2:

### TA identity list

> TAI
> Time list
   >>Start Time
   >>End Time

It may be understood that a plurality of area identities may use a same time period. For example, the following identification manner may also be used:

### TA identity list

> Time list
   >>Start Time
   >>End Time
> TA identity list
   > >TAI

Alternatively, in an optional implementation, the time period information corresponding to the at least one first area identity may include timer information corresponding to the valid time period of each first area identity. Optionally, the timer may start at a start time point of the valid time period and stop at an end time point of the valid time period. The at least one first area identity and the timer may be in a one-to-one correspondence, or may be in a one-to-many relationship, or may be in a many-to-one relationship. For example, the TA list includes the TAI 1: a timer 1, the TAI 2: a timer 2, and the TAI 3: a timer 3. It is assumed that the timer 1 is used to indicate that a start time (a start time point) is 11:00, and a stop time (an end time point) is 13:30; the timer 2 is used to indicate that a start time is 18:00 and a stop time is 20:30; and the timer 3 is used to indicate that a start time is 2:30 and a stop time is 5:00. It may indicate that the valid time corresponding to the TAI 1 is 11:00-13:30; the valid time of the TAI 2 is 18:00-20:30; and the valid time of the TAI 3 is 2:30-5:00. In this way, the core network node and the terminal can manage the location of the terminal based on the TA list. For another example, the TA list includes the TAI 1, the TAI 2, the TAI 3 (in sequence), and a timer 1. The timer 1 is used to indicate that a start time is 11:00 (the start time may alternatively be a time when the terminal receives a message including the first area identity list information), a stop time is 13:00, and a current TAI is changed every 6 hours (h). It may indicate that the valid time corresponding to the TAI 1 is 11:00-13:00 and 5:00-7:00; the valid time of the TAI 2 is 17:00-18:00; and the valid time of the TAI 3 is 23:00-1:00. In this way, the core network node and the terminal can manage the location of the terminal based on the TA list.

Further optionally, the terminal may receive the first area identity list information sent by the core network node, and then the terminal may trigger an area update procedure based on the first area identity list information and an area identity that is broadcast by the satellite node and that is received by the terminal.

When downlink data for the terminal arrives, the core network node may page the terminal based on the first area identity list information. Specifically, if downlink data arrives, the core network node may send a paging request to the satellite node. It may be understood that, in one manner, the core network node may send the paging request to all satellite nodes that support at least one first area identity in the first area identity list. In another manner, the core network node sends the paging request only to all satellite nodes that support at least one first area identity in the first area identity list and that broadcast an area identity whose valid time period matches a current time. For example, a first area identity broadcast by a satellite node 1 is the TAI 1, a first area identity broadcast by a satellite node 2 is the TAI 2, and the first area identity list information allocated to the terminal includes the TAI 1 and the TAI 2. Valid time of the TAI 1 is 0:00-18:00, and valid time of the TAI 2 is 15:00-24:00. It is assumed that a current time is 23:00. In the first manner, the core network node sends the paging request to both the satellite node 1 and the satellite node 2. In the second manner, the core network node sends the paging request to only the satellite node 2, because a current time is 23:00, and is not the valid time of the TAI 1. In the second manner, paging signaling overheads can be reduced. After receiving the paging request, the satellite node may page the terminal on an air interface side. This manner is different from a conventional technology in which a geographical location is used as an anchor to page a user. In this application, a serving satellite is used as an anchor to page a user. To be specific, during paging of the user, the core network node only needs to find, based on a current TA list of the user, a satellite node that serves the user, and then pages the user through the satellite. This implements paging of a terminal in non-terrestrial communication.

Optionally, when the terminal triggers the area update procedure based on the first area identity list information and the area identity that is broadcast by the satellite node and that is received by the terminal, the terminal may receive a broadcast message from the satellite node. The broadcast message may include an area identity corresponding to the satellite node, for example, a tracking area identity. Further, the terminal may compare the area identity broadcast by the satellite node at a current location with the at least one first area identity included in the first area identity list information. If the area identity that is broadcast by the satellite node and that is received by the user is different from the at least one first area identity, it may indicate that the terminal has moved out of a location area corresponding to the first area identity list information. In this case, the terminal may send an update message to the core network node, where the update message may be used to indicate that the terminal moves out of the area corresponding to the first area identity list information. For example, it is assumed that a broadcast TAI received by the terminal is a TAI 4 (In other words, a TAI corresponding to the current location area of the terminal is the TAI 4), the first area identity list information includes a TAI 1, a TAI 2, and a TAI 3, and the TAI 4 is not in the first area identity list information. In this case, the terminal may send the update message to the core network node. Then, the core network node re-determines new area identity list information for the terminal based on the current location area of the terminal.

Alternatively, optionally, when the terminal triggers the area update procedure based on the first area identity list information and the area identity that is broadcast by the satellite node and that is received by the terminal, the terminal may receive an area identity broadcast by the satellite node. Further, the terminal may compare the area identity broadcast by the satellite node at a current location with a second area identity included in the first area identity list information. When the area identity that is broadcast by the satellite node and that is received by the user is different from the second area identity, it may indicate that the terminal has moved out of a location area corresponding to the second area identity. In this case, the terminal may send an update message to the core network node. The second area identity is a first area identity that corresponds to time period information matching a current system time and that is in the at least one first area identity. Alternatively, the second area identity is a first area identity that is in the at least one first area identity and whose timer is started, namely, a first area identity whose valid time period matches the current time. The update message is used to indicate that the terminal moves out of an area corresponding to the first area identity list information. For example, the first area identity list information includes a TAI 1 (1:00-1:30, 9:00-9:30, 17:00-17:30), a TAI 2 (14:00-16:30), and a TAI 3 (3:00-3:20, 9:00-9:20,15:00-15:20,21:00-21:20). It is assumed that a broadcast TAI received by the terminal is the TAI 2, and a system time (a current time) is 1:15. A time period that matches 1:15 is the time period 1:00-1:30, a TAI corresponding to the time period 1:00-1:30 is the TAI 1, and the broadcast TAI 2 is different from the TAI 1. It indicates that the terminal has moved out of a location area allocated by the core network, and the terminal may send an update message to the core network node. Then, the core network node re-determines the second area identity list information, namely, new identity list information for the terminal based on the current location area of the terminal.

Further optionally, the current location information of the terminal may be carried in the update message and sent to the core network node. Further optionally, the update message may be a tracking area (registration area) update request message.

It may be understood that step 403 may be performed in a user registration (attach) process, or may be performed in a registration area update process, or may be performed in a tracking area update process. Step 403 and steps 401 and 402 may be implemented independently, and have no necessary relationship. In other words, in some embodiments, step 403 may not be performed after step 401 and step 402 are performed. Step 403 may be performed when the core network node receives the foregoing request message.

In this embodiment, the area identity broadcast by the satellite node does not change, but an area identity corresponding to a fixed ground coverage area is time-varying. The satellite node sends the orbit information of the satellite node to the core network node, so that the core network node can determine, based on the orbit information, identity list information that includes at least one first area identity, and send the identity list information to the terminal. In this way, the core network node can perform access or mobility management on the terminal based on the orbit information of the satellite node, and track a location of the terminal. This implements non-terrestrial communication.

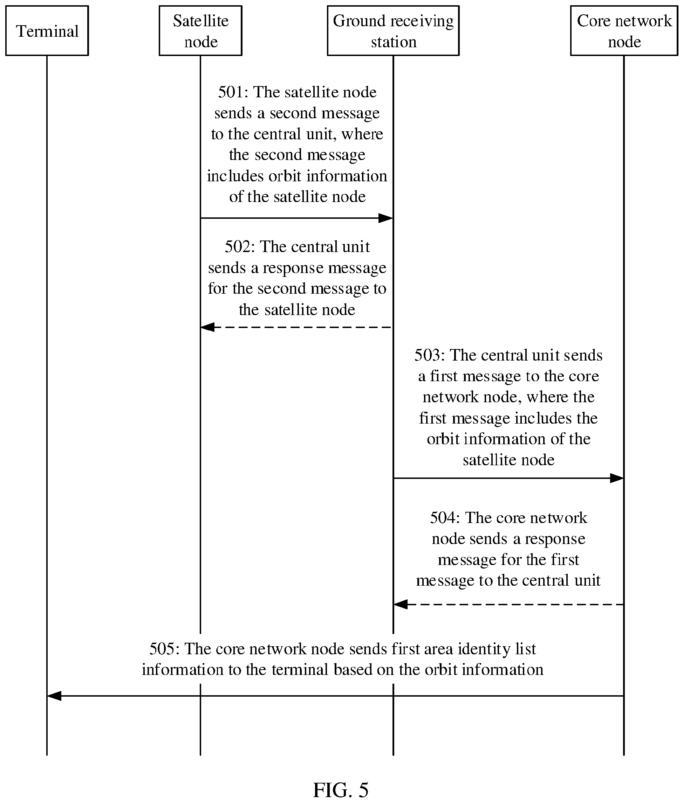

FIG. 5 is a schematic interaction diagram of another communication method according to an embodiment of the present invention. In this embodiment, a satellite node is a distributed node. The communications system includes the satellite node, a ground receiving station, a core network node, and a terminal. For an architecture of the communications system, refer to FIG. 1a and FIG. 1d. The ground receiving station has a function of a central unit. In other words, it may be considered that the ground receiving station is a central unit corresponding to the satellite node. Further, in this embodiment, an area identity (for example, a TAC or a TAI) broadcast by the satellite node remains unchanged, that is, does not change with movement of the satellite node in a period of time. For example, when the core network node (for example, an AMF or an AMF set) connected to the satellite node does not change, the area identity broadcast by the satellite node does not change. In this period of time, for a stationary terminal, because a satellite node covering the user may change or a cell provided by the satellite node covering the user may change, an area identity that is broadcast by the satellite node and that is received by the terminal may be time-varying. For descriptions of the area identity, refer to the related descriptions in the embodiment shown in FIG. 4. Details are not described herein again. The following uses an example in which the area identity is a TAI for description. As shown in FIG. 5, the method may include the following steps.

501: The satellite node sends a second message to the ground receiving station, where the second message includes orbit information of the satellite node.

The ground receiving station may receive the second message sent by the satellite node. The second message may be an interface setup message or a configuration update message, namely, a second interface setup message or a second configuration update message. For example, the second interface setup message may be an F1 setup request (F1 Setup Request) message, or may be a DU configuration update (DU Configuration Update) message.

Optionally, the orbit information may include any one or more of coverage capability information, time information, and orbit information. The coverage capability information may include any one or more of a transmit power, an antenna tilt, a coverage radius, and geographical coverage information (which may be represented by longitude and latitude, or may be represented in another manner) on the surface of the earth at different time points. The time information may include time required for orbiting the earth for one circle. The orbit information may include an orbit height.

502: The ground receiving station sends a response message for the second message to the satellite node.

The satellite node may receive the response message for the second message. The response message is an interface setup response message or a configuration update response message, and is specifically an interface setup response message for the second message such as the second interface setup message or a configuration update response message for the second message such as the second configuration update message. For example, the response message for the second message is an F1 setup response (F1 Setup Response) message or a DU configuration update feedback (DU Configuration Update ACK) message.

It may be understood that step 502 is optional. In some embodiments, step 502 is not required. In other words, the ground receiving station may not send the response message for the second message to the satellite node.

503: The ground receiving station sends a first message to the core network node, where the first message includes the orbit information of the satellite node.

The core network node may receive the first message sent by the ground receiving station. The first message includes the orbit information of the satellite node, and the first message is an interface setup message or a configuration update message, namely, the first interface setup message or the first configuration update message. For example, the first interface setup message may be an NG setup request message, a RAN configuration update message, or the like.

Optionally, the first message may further include an identifier of a cell served by the satellite node and a TAC or TAI corresponding to the cell identifier.

It may be understood that step 502 and step 503 are not sequential. For example, step 503 may be performed before step 502, or step 502 and step 503 may be performed at the same time.

504: The core network node sends a response message for the first message to the ground receiving station.

The core network node feeds back the response message for the first message, where the response message for the first message is an interface setup response message or a configuration update response message. In this embodiment, after receiving the first message from the ground receiving station, the core network node may send, to the ground receiving station, the response message for the first message, namely, an interface setup response message for the first message such as the first interface setup message or a configuration update response message for the first message such as the first configuration update message. The ground receiving station may receive the response message that is for the first message and that is sent by the core network node. For example, when the first message is the NG setup request message, the response message for the first message may be an NG setup response message. For another example, when the first message is the RAN configuration update message, the response message for the first message may be a RAN configuration update acknowledge message.

Optionally, at least one (one or more) satellite node may send a respective second message to the ground receiving station, and the ground receiving station may receive the at least one second message. Then, the ground receiving station may send the first message to the core network node based on each second message. For example, the satellite node may send the second message when an orbit location is updated. The core network node may receive each first message sent by the ground receiving station, and may send a response message for each first message to the ground receiving station. Further optionally, the ground receiving station may separately send each first message, or the ground receiving station may generate one first message based on the second message received within a preset time range. In other words, the first message carries orbit information of each satellite node (the first message may further carry an area identity corresponding to each satellite node) and is sent to the core network node. When returning the response message for the first message to the ground receiving station, the core network node may separately send the response message for each first message to the ground receiving station, or send one response message to the ground receiving station, to reduce information transmission overheads in the system and reduce a quantity of messages. A manner in which the ground receiving station sends the first message to the core network node and a manner in which the core network node sends the response message for the first message to the ground receiving station are not limited in this application.

It may be understood that step 504 is optional. In some embodiments, step 504 is not required. In other words, the core network node may not send the response message for the first message to the ground receiving station.

505: The core network node sends first area identity list information to the terminal based on the orbit information.

The first area identity list information includes at least one first area identity, and the first area identity may be used for access or mobility management of the terminal. Optionally, the terminal may send a request message to the core network node. The core network node may receive the request message from the terminal, and send a response message for the request message to the terminal. The response message for the request message includes the first area identity list information. The first area identity list information may further include time period information corresponding to the at least one first area identity. The time period information is used to indicate a valid time period of each of the at least one first area identity. Further optionally, the time period information corresponding to the at least one first area identity includes at least one group of time period information. The at least one group of time period information includes a start time point and an end time point. Alternatively, the time period information corresponding to the at least one first area identity may include timer information corresponding to the valid time period of each first area identity. Further optionally, a timer information corresponding to the timer information may be started at the start time point of the valid time period and stopped at the end time point of the valid time period. Further, the terminal may trigger an area update procedure, monitor paging, and the like based on the first area identity list information and an area identity that is broadcast by the satellite node and that is received by the terminal. Details are not described herein.

Specifically, for descriptions of step 505, refer to the related descriptions of step 403 in the embodiment shown in FIG. 4. Details are not described herein again.

Optionally, the first message may further include cell-type information. The cell-type information may be used to indicate that the first message is used for mobility management of the terminal, and the mobility management is cell-specific mobility management, where the cell is covered by a satellite.

In this embodiment, the area identity broadcast by the satellite node does not change, but an area identity corresponding to a fixed ground coverage area is time-varying. The satellite node sends, to the ground receiving station, the second message that carries the orbit information of the satellite node. Then, the ground receiving station sends the first message that carries the orbit information to the core network node, so that the core network node can determine, based on the orbit information, identity list information that includes at least one first area identity, and send the identity list information to the terminal. In this way, the core network node can perform access or mobility management on the terminal based on the orbit information of the satellite node, and track a location of the terminal. This implements non-terrestrial communication.

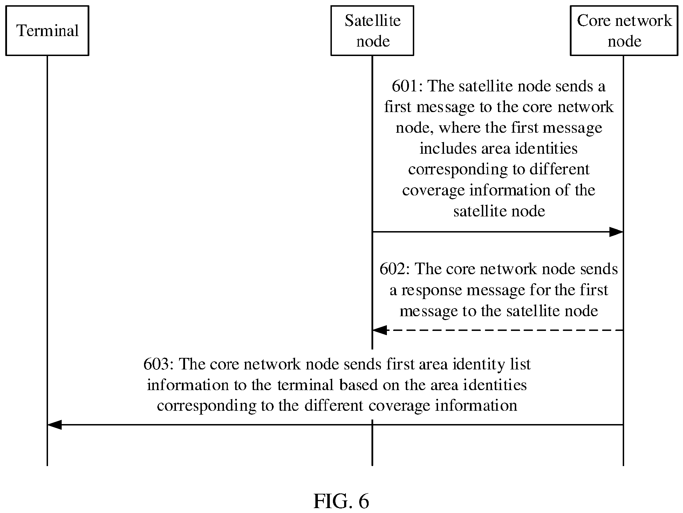

FIG. 6 is a schematic interaction diagram of still another communication method according to an embodiment of the present invention. In this embodiment, a satellite node is configured with all base station functions. In other words, the satellite node has full base station functions. The communications system includes the satellite node, a core network node, and a terminal. For an architecture of the communications system, refer to FIG. 1a and FIG. 1c. Further, in this embodiment, an area identity (for example, a TAC or a TAI) broadcast by the satellite node is time-varying. In other words, TACs or TAIs broadcast by the satellite node at different time points, or different orbits, or different coverage areas, or after the satellite node establishes connections to different core network nodes may be different. In this way, it can be maximally ensured that an area identity (for example, a TAC or a TAI) corresponding to a fixed ground coverage area does not change or changes slowly or changes only between several fixed area identities. For descriptions of the area identity, refer to the related descriptions in the embodiment shown in FIG. 4. Details are not described herein again. As shown in FIG. 6, the method may include the following steps.

601: The satellite node sends a first message to the core network node, where the first message includes different coverage information of the satellite node and area identities corresponding to the different coverage information.

The first message may be an interface setup message or a configuration update message, namely, a first interface setup message or a first configuration update message. For example, the first interface setup message may be an NG setup request message, a RAN configuration update message, or the like.

Optionally, the coverage information may include any one or more of an orbit identifier, a time period, and a coverage area (for example, an area formed by a longitude and latitude range on the surface of the earth).

Optionally, the first message may include each piece of coverage information of the satellite node and an area identity corresponding to each piece of coverage information, that is, area identities broadcast by the satellite node in different orbits, different time periods, or different coverage areas, for example, an identifier of a cell served by the satellite node and an area identity, for example, a TAC or a TAI, corresponding to the cell identifier. Area identities (for example, TACs or TAIs) corresponding to the satellite node in different orbits, different time periods, or different coverage areas are different. The first message may include each piece of coverage information of the satellite node and the area identity corresponding to each piece of coverage information.

For example, TAIs/TACs broadcast by the satellite node in different time periods are different. The first message may be in the following forms:

### Example 1:

### TA identity list

> Broadcast TAI/TAC
> Start time
> End time

### Example 2:

### TA identity list

> Broadcast TAI/TAC
> Time list
   >>Start Time
   >>End Time

Further optionally, the first message may further include orbit information of the satellite node. The orbit information may include any one or more of coverage capability information, time information, and orbit information. The coverage capability information may include any one or more of a transmit power, an antenna tilt, a coverage radius, and geographical coverage information (which may be represented by longitude and latitude, or may be represented in another manner) on the surface of the earth at different time points. The time information may include time required for orbiting the earth for one circle. The orbit information may include an orbit height.

It may be understood that the first message may be sent by the satellite node to a ground receiving station, and then forwarded by the ground receiving station to the core network node.

602: The core network node sends a response message for the first message to the satellite node.

The response message for the first message may be an interface setup response message or a configuration update response message.

The core network node may receive the first message, and may feed back the response message for the first message. In this embodiment, after receiving the first message from the satellite node, the core network node may send the response message for the first message to the satellite node. The satellite node may receive the response message that is for the first message and that is sent by the core network node. For details, refer to the related descriptions of step 402 in the embodiment shown in FIG. 4. Details are not described herein again.

It may be understood that step 602 is optional. In some embodiments, step 602 is not required. In other words, the core network node may not send the response message for the first message to the satellite node.

603: The core network node sends first area identity list information to the terminal based on area identities corresponding to the different coverage information.

The first area identity list information includes at least one first area identity, and the first area identity may be used for access or mobility management of the terminal. Details are not described herein.

After receiving, from at least one satellite node, the first message that carries the area identities corresponding to the different coverage information of the satellite node, the core network node may determine, for the terminal based on the area identities corresponding to the different coverage information (for example, different orbits, different time points, or different coverage areas) of each satellite node, the at least one first area identity. For example, the core network node may determine, based on the area identities corresponding to the different coverage information of the satellite node, one or more TAIs/TACs corresponding to a geographical location, that is, determine one or more TAIs/TACs that are broadcast by the satellite node and that can be received by a stationary terminal at a geographical location. Further, the core network node may send, to the terminal, the first area identity list information that is used to indicate these TAIs/TACs. For example, a TA list including these TAIs/TACs is generated, and the TA list is sent to the terminal. For example, the core network node may send a registration accept message including the TA list to the terminal.

Optionally, the terminal may send a request message to the core network node. The core network node may receive the request message from the terminal, and send a response message for the request message to the terminal. The response message for the request message includes the first area identity list information. Optionally, the first area identity list information may further include time period information corresponding to the at least one first area identity. The time period information is used to indicate a valid time period of each of the at least one first area identity. Further optionally, the time period information corresponding to the at least one first area identity includes at least one group of time period information. The at least one group of time period information includes a start time point and an end time point. Alternatively, the time period information corresponding to the at least one first area identity may include timer information corresponding to the valid time period of each first area identity. Details are not described herein again. For details, refer to the related descriptions in the embodiment shown in FIG. 4. Details are not described herein again.

It may be understood that step 603 may be performed in a user registration (attach) process, or may be performed in a registration area update process, or may be performed in a tracking area update process. Step 603 and steps 601 and 602 may be implemented independently. In other words, in some embodiments, step 603 may not be performed after step 601 and step 602 are performed. Step 603 may be performed when the core network node receives the foregoing request message.

Further optionally, the terminal may receive the first area identity list information sent by the core network node, and then the terminal may trigger an area update procedure, monitor paging, and the like based on the first area identity list information and an area identity that is broadcast by the satellite node and that is received by the terminal.

When downlink data for the terminal arrives, the core network node may page the terminal based on the first area identity list information. Specifically, if downlink data arrives, the core network node may send a paging request to the satellite node. In one manner, the core network node may send the paging request to all satellite nodes that support at least one first area identity in the first area identity list. In another manner, the core network node sends the paging request only to a satellite node that broadcasts an area identity whose valid time period matches a current time or is valid in a current area and that supports at least one first area identity in the first area identity list, to reduce paging signaling overheads. After receiving the paging request, the satellite node may page the terminal on an air interface side. For details, refer to the related descriptions in the embodiment shown in FIG. 4. Details are not described herein again.

Optionally, the terminal may receive a broadcast message from the satellite node, where the broadcast message may include an area identity corresponding to the satellite node or a cell, for example, a tracking area. Further, the terminal may compare the area identity broadcast by the satellite node at a current location with the at least one first area identity included in the first area identity list information. If the area identity of the satellite node is different from the at least one first area identity, it may indicate that the terminal has moved out of an area (an original location area) corresponding to the first area identity list information. In this case, the terminal may send an update message to the core network node, where the update message may be used to indicate that the terminal moves out of the area corresponding to the first area identity list information. For details, refer to the related descriptions in the embodiment shown in FIG. 4. Details are not described herein again. Further optionally, current location information of the terminal may be carried in the update message and sent to the core network node. Further optionally, the update message may be a tracking area (registration area) update request message.

In this embodiment, the area identity broadcast by the satellite node is time-varying, but an area identity corresponding to a fixed ground coverage area does not change or changes slowly or changes between limited area identities. In this case, the satellite node sends, to the core network node, the area identities corresponding to the different coverage information of the satellite node, so that the core network node can determine, based on the area identities corresponding to the different coverage information, identity list information including at least one first area identity, and send the identity list information to the terminal. In this way, the core network node can perform access or mobility management on the terminal based on the area identities corresponding to the different coverage information, and track a location of the terminal. This implements non-terrestrial communication.

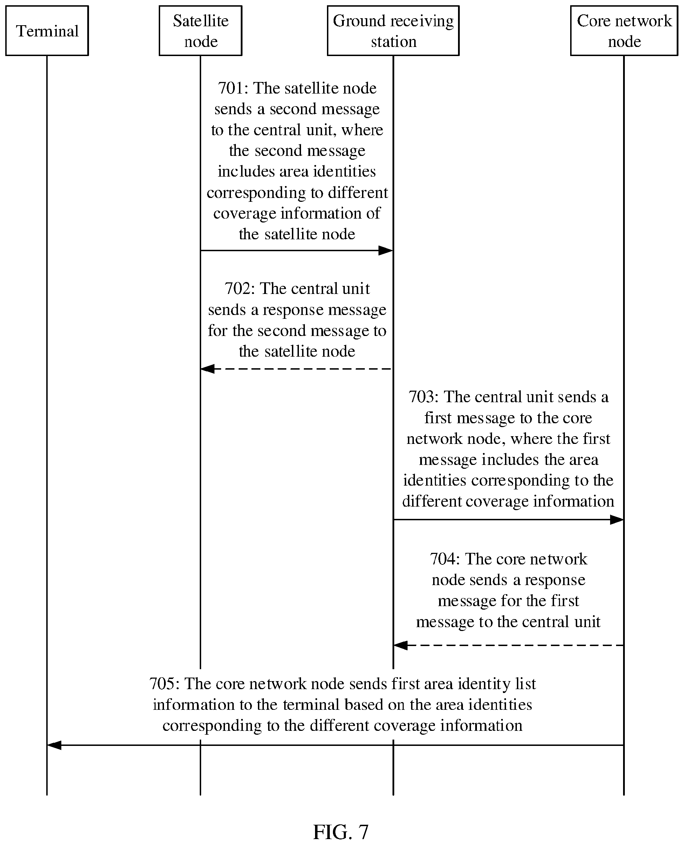

FIG. 7 is a schematic interaction diagram of still yet another communication method according to an embodiment of the present invention. In this embodiment, a satellite node is a distributed node. The communications system includes the satellite node, a ground receiving station, a core network node, and a terminal. For an architecture of the communications system, refer to FIG. 1a and FIG. 1d. The ground receiving station has a function of a central unit. In other words, it may be considered that the ground receiving station is a central unit corresponding to the satellite node. Further, in this embodiment, an area identity (for example, a TAC or a TAI) broadcast by the satellite node is time-varying. In other words, TACs or TAIs broadcast by the satellite node at different time points, or different orbits, or different coverage areas, or after the satellite node establishes connections to different core network nodes may be different. In this way, it can be maximally ensured that an area identity (for example, a TAC or a TAI) corresponding to a fixed ground coverage area does not change or changes slowly or changes only between several fixed area identities. For descriptions of the area identity, refer to the related descriptions in the embodiment shown in FIG. 4. Details are not described herein again. As shown in FIG. 7, the method may include the following steps.

701: The satellite node sends a second message to the ground receiving station, where the second message includes different coverage information of the satellite node and area identities corresponding to the different coverage information.

The ground receiving station may receive the second message sent by the satellite node. The second message may be an interface setup message or a configuration update message, namely, a second interface setup message or a second configuration update message. For example, the second interface setup message may be an F1 setup request message, a DU configuration update message, or the like.

Optionally, the coverage information may include any one or more of an orbit identifier, a time period, and a coverage area (for example, an area formed by a longitude and latitude range on the surface of the earth). In other words, the first message may include corresponding area identities broadcast by the satellite node in different orbits, different time periods, or different coverage areas, that is, includes an identifier of a cell served by the satellite nodes and a TAC or TAI corresponding to the cell identifier. TACs or TAIs corresponding to the satellite node in different orbits, different time periods, or different coverage areas may be different. The first message may include each piece of coverage information of the satellite node and an area identity corresponding to each piece of coverage information.

702: The ground receiving station sends a response message for the second message to the satellite node.

The satellite node may receive the response message for the second message. The response message is an interface setup response message or a configuration update response message, and is specifically an interface setup response message for the second message such as the second interface setup message or a configuration update response message for the second message such as the second configuration update message. For example, the response message for the second message may be an F1 setup response message, a DU configuration update ACK, or the like.

It may be understood that step 702 is optional. In some embodiments, step 702 is not required. In other words, the ground receiving station may not send the response message for the second message to the satellite node.

703: The ground receiving station sends the first message to the core network node, where the first message includes the different coverage information and the area identities corresponding to the different coverage information.

The core network node may receive the first message sent by the ground receiving station. The first message may be an interface setup message or a configuration update message, namely, a first interface setup message or a first configuration update message. For example, the first interface setup message may be an NG setup request message, a RAN configuration update message, or the like. For example, the first message and/or the second message may be in a same form as the first message in the embodiment shown in FIG. 6. Details are not described herein again.

Further optionally, the first message and/or the second message may further include orbit information of the satellite node. The orbit information may include any one or more of coverage capability information, time information, and orbit information. The coverage capability information may include any one or more of a transmit power, an antenna tilt, a coverage radius, and geographical coverage information (which may be represented by longitude and latitude, or may be represented in another manner) on the surface of the earth at different time points. The time information may include time required for orbiting the earth for one circle. The orbit information may include an orbit height. Details are not described herein again.

It may be understood that step 702 and step 703 are not sequential. For example, step 703 may be performed before step 702, or step 702 and step 703 may be performed at the same time. Details are not described herein.

704: The core network node sends a response message for the first message to the ground receiving station.

The core network node feeds back the response message for the first message, where the response message for the first message is an interface setup response message or a configuration update response message. In this embodiment, after receiving the first message from the ground receiving station, the core network node may send, to the ground receiving station, the response message for the first message, namely, an interface setup response message for the first message such as the first interface setup message or a configuration update response message for the first message such as the first configuration update message. The ground receiving station may receive the response message that is for the first message and that is sent by the core network node. For example, when the first message is the NG setup request message, the response message for the first message may be an NG setup response message. For another example, when the first message is the RAN configuration update message, the response message for the first message may be a RAN configuration update acknowledge message.

Optionally, at least one (one or more) satellite node may send a respective second message corresponding to satellite node to the ground receiving station, and the ground receiving station may receive the at least one second message. Then, the ground receiving station may send the first message to the core network node based on each second message. The core network node may receive each first message sent by the ground receiving station, and may send a response message for each first message to the ground receiving station. For details, refer to the related descriptions of step 504 in the embodiment shown in FIG. 5. Details are not described herein again.

It may be understood that step 704 is optional. In some embodiments, step 704 is not required. In other words, the core network node may not send the response message for the first message to the ground receiving station.

705: The core network node sends first area identity list information to the terminal based on the area identities corresponding to the different coverage information.

The first area identity list information includes at least one first area identity, and the first area identity may be used for access or mobility management of the terminal. Optionally, the terminal may send a request message to the core network node. The core network node may receive the request message from the terminal, and send a response message for the request message to the terminal. The response message for the request message includes the first area identity list information. Optionally, the first area identity list information may further include time period information corresponding to the at least one first area identity. The time period information is used to indicate a valid time period of each of the at least one first area identity. Further optionally, the time period information corresponding to the at least one first area identity includes at least one group of time period information. The at least one group of time period information includes a start time point and an end time point. Alternatively, the time period information corresponding to the at least one first area identity may include timer information corresponding to the valid time period of each first area identity. Details are not described herein again.

Specifically, for descriptions of step 705, refer to the related descriptions of step 603 in the embodiment shown in FIG. 6. Details are not described herein again.

Optionally, the first message may further include cell-type information. The cell-type information may be used to indicate that the first message is used for mobility management of the terminal, and the mobility management is cell-specific mobility management, where the cell is covered by a satellite.

Further optionally, the terminal may receive the first area identity list information sent by the core network node, and then the terminal may determine whether to trigger an area update procedure, monitor paging, and the like based on the first area identity list information and an area identity that is broadcast by the satellite node and that is received by the terminal. When downlink data for the terminal arrives, the core network node may page the terminal based on the first area identity list information. Details are not described herein.

Optionally, the terminal may receive a broadcast message from the satellite node, where the broadcast message includes an area identity of the satellite node. Further, the terminal may compare the area identity broadcast by the satellite node at a current location with the at least one first area identity included in the first area identity list information. If the area identity of the satellite node is different from the at least one first area identity, it may indicate that the terminal has moved out of a location area (an original location area) corresponding to the first area identity list information. In this case, the terminal may send an update message to the core network node, to indicate that the terminal moves out of the area corresponding to the first area identity list information. For details, refer to the related descriptions in the embodiment shown in FIG. 4. Details are not described herein again.

In this embodiment, the area identity broadcast by the satellite node is time-varying, but an area identity corresponding to a fixed ground coverage area remains unchanged. The satellite node sends, to the central unit, the second message that carries the area identities corresponding to the different coverage information of the satellite node. Then, the central unit sends, to the core network node, the first message that carries the area identities corresponding to the different coverage information, so that the core network node can determine, based on the area identities corresponding to the different coverage information, identity list information that includes at least one first area identity, and send the identity list information to the terminal. In this way, the core network node can perform access or mobility management on the terminal based on the area identities corresponding to the different coverage information, and track a location of the terminal. This implements non-terrestrial communication.

The foregoing method embodiments are example descriptions of the communication method in this application. The descriptions of the embodiments have respective focuses. For a part that is not described in detail in an embodiment, refer to related descriptions in other embodiments.

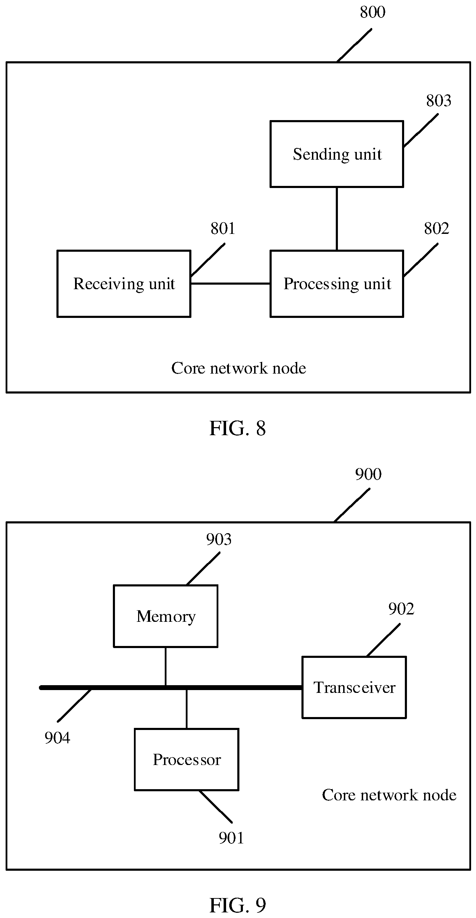

FIG. 8 is a possible schematic structural diagram of a core network node in the foregoing embodiments. Referring to FIG. 8, the core network node 800 may include a receiving unit 801, a processing unit 802, and a sending unit 803. These units may perform corresponding functions of the core network node in the foregoing method examples. For example, the receiving unit 801 is configured to receive a first message, where the first message includes orbit information of a satellite node. The processing unit 802 is configured to determine first area identity list information based on the orbit information. The sending unit 803 is configured to send the first area identity list information to a terminal, where the first area identity list information includes at least one first area identity, and the first area identity is used for access or mobility management of the terminal.

Optionally, the sending unit 803 is further configured to: when downlink data for the terminal arrives, page, by the core network node, the terminal based on the first area identity list information.

Optionally, the orbit information includes any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

Optionally, the first area identity list information further includes time period information corresponding to the at least one first area identity, and the time period information is used to indicate a valid time period of each of the at least one first area identity.

Optionally, the time period information corresponding to the at least one first area identity includes at least one group of time period information, and the at least one group of time period information includes a start time point and an end time point. Alternatively, the time period information corresponding to the at least one first area identity includes timer information corresponding to the valid time period of each first area identity.

Optionally, the satellite node is a distributed unit.

The receiving unit 801 may be specifically configured to receive the first message sent by a ground receiving station. The first message is sent after the ground receiving station receives a second message that carries the orbit information and that is sent by the satellite node. The ground receiving station has a function of a central unit.

Optionally, the satellite node is configured with a full base station function.

The receiving unit 801 may be specifically configured to receive the first message sent by the satellite node.

It may be understood that, in this embodiment of the present invention, division into the units is merely an example, and is merely logical function division. During actual implementation, another division manner may be used. Functional units in this embodiment of the present invention may be integrated into one unit, or each of the units may exist alone physically, or two or more units are integrated into one unit. The integrated unit may be implemented in a form of hardware, or may be implemented in a form of a software functional unit.

Optionally, the core network node may implement, by using the foregoing units, some or all of the steps performed by the core network node in the communication methods in the embodiments shown in FIG. 4 to FIG. 7. It should be understood that this embodiment of the present invention is an apparatus embodiment corresponding to a method embodiment, and the descriptions of the method embodiment are also applicable to this embodiment of the present invention.

Referring to FIG. 9, in another embodiment, the core network node 900 may include a processor 901 and a transceiver 902. Optionally, the core network node may further include a memory 903. The processor 901, the transceiver 902, and the memory 903 may be connected to each other. For example, the processor 901, the transceiver 902, and the memory 903 may be connected to each other through a bus 904. The bus 904 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 9, but this does not mean that there is only one bus or only one type of bus.

The processor 901 may be a processor or a controller, for example, may be a central processing unit (Central Processing Unit, CPU for short), a general purpose processor, a digital signal processor (Digital Signal Processor, DSP for short), an application-specific integrated circuit (Application-Specific Integrated Circuit, ASIC for short), a field programmable gate array (Field Programmable Gate Array, FPGA for short) or another programmable logic device, a transistor logic device, or a hardware component, or any combination thereof. The processor 901 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver 902 may include an independent receiver and an independent transmitter, or may be obtained by integrating the receiver and the transmitter.

The processor 901 is configured to control and manage an action of the core network node. For example, the processor 901 is configured to support the core network node in determining the first area identity list information and/or is configured to perform another process of the technology described in this specification. The transceiver 902 may perform a communication function, to support communication between the core network node and another network entity, for example, communication between the core network node and a functional unit or a network entity such as a terminal, a satellite node, or a ground receiving station shown in FIG. 4 to FIG. 7. Specifically, the processor 901 is configured to determine to receive or send a signal, and is a controller of a communication function. To be specific, when receiving or sending a signal, the processor 901 controls or drives the transceiver 902 to perform related receiving or sending. The transceiver 902 may implement a specific communication operation under control of the processor 901, and is an executor of a communication function.

Further, the memory 903 may be configured to store at least one of program code and data of the core network node. When the processor 901, for example, a CPU, a DSP, or a microcontroller, works under driving of software, the processor 901 may read the program code stored in the memory 903 and work under driving of the program code. For example, the processor 901 may read the program code stored in the memory 903, to perform some or all of the steps performed by the core network node in FIG. 4 to FIG. 7. Details are not described herein again.

This application further provides a chip system. The chip system may include a processor, configured to support a core network node in implementing the foregoing function of the core network node, for example, processing data and/or a message in the foregoing communication methods. Optionally, the chip system may further include a memory. The memory may be configured to store a program instruction and data that are necessary for the core network node. Further optionally, the chip system may include a chip, or may include a chip and another discrete device.

The method or algorithm steps described with reference to the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the core network node. Certainly, the processor and the storage medium may alternatively exist in the core network node as discrete components.

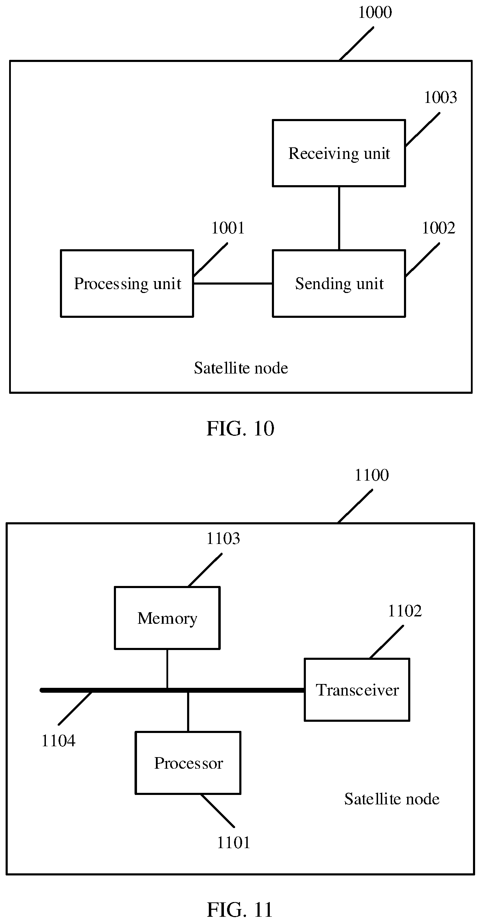

FIG. 10 is a possible schematic structural diagram of a satellite node in the foregoing embodiments. Referring to FIG. 10, the satellite node 1000 may include a processing unit 1001 and a sending unit 1002. These units may perform corresponding functions of the satellite node in the foregoing method examples. For example, the processing unit 1001 is configured to generate a first message or a second message, where the first message or the second message includes orbit information of the satellite node. The sending unit 1002 is configured to send the first message or the second message.

Optionally, the satellite node is a distributed unit.

The sending unit 1002 may be specifically configured to send the second message to a ground receiving station. The second message includes the orbit information, so that the ground receiving station sends, to the core network node, the first message that carries the orbit information. The ground receiving station has a function of a central unit.

Optionally, the satellite node is configured with a full base station function.

The sending unit 1002 may be specifically configured to send the first message to the core network node, where the first message includes the orbit information.

Optionally, the orbit information includes any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

Optionally, the satellite node may further include a receiving unit 1003.

The receiving unit 1003 may be configured to receive a response message for the first message or a response message for the second message. The response message may be an interface setup response message or a configuration update response message, and details are not described herein.

It may be understood that, in this embodiment of the present invention, division into the units is merely an example, and is merely logical function division. During actual implementation, another division manner may be used. Functional units in this embodiment of the present invention may be integrated into one unit, or each of the units may exist alone physically, or two or more units are integrated into one unit. The integrated unit may be implemented in a form of hardware, or may be implemented in a form of a software functional unit.

Optionally, the satellite node may implement, by using the foregoing units, some or all of the steps performed by the satellite node in the communication methods in the embodiments shown in FIG. 4 to FIG. 7. It should be understood that this embodiment of the present invention is an apparatus embodiment corresponding to a method embodiment, and the descriptions of the method embodiment are also applicable to this embodiment of the present invention.

Referring to FIG. 11, in another embodiment, the satellite node 1100 may include a processor 1101 and a transceiver 1102. Optionally, the satellite node may further include a memory 1103. The processor 1101, the transceiver 1102, and the memory 1103 may be connected to each other. For example, the processor 1101, the transceiver 1102, and the memory 1103 may be connected to each other through a bus 1104. The bus 1104 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 11, but this does not mean that there is only one bus or only one type of bus.

The processor 1101 may be a processor or a controller, for example, may be a central processing unit (Central Processing Unit, CPU for short), a general purpose processor, a digital signal processor (Digital Signal Processor, DSP for short), an application-specific integrated circuit (Application-Specific Integrated Circuit, ASIC for short), a field programmable gate array (Field Programmable Gate Array, FPGA for short) or another programmable logic device, a transistor logic device, or a hardware component, or any combination thereof. The processor 1101 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver 1102 may include an independent receiver and an independent transmitter, or may be obtained by integrating the receiver and the transmitter.

The processor 1101 is configured to control and manage an action of the satellite node. For example, the processor 1101 is configured to support the satellite node in determining orbit information of the satellite node, and/or is configured to perform another process of the technology described in this specification. The transceiver 1102 may perform a communication function, to support communication between the satellite node and another network entity, for example, communication between the satellite node and a functional unit or a network entity such as a terminal, a core network node, or a ground receiving station shown in FIG. 4 to FIG. 7. Specifically, the processor 1101 is configured to determine to receive or send a signal, and is a controller of a communication function. To be specific, when receiving or sending a signal, the processor 1101 controls or drives the transceiver 1102 to perform related receiving or sending. The transceiver 1102 may implement a specific communication operation under control of the processor 1101, and is an executor of a communication function.

Further, the memory 1103 may be configured to store at least one of program code and data of the satellite node. When the processor 1101, for example, a CPU, a DSP, or a microcontroller, works under driving of software, the processor 1101 may read the program code stored in the memory 1103 and work under driving of the program code. For example, the processor 1101 may read the program code stored in the memory 1103, to perform some or all of the steps performed by the satellite node in FIG. 4 to FIG. 7. Details are not described herein again.

This application further provides a chip system. The chip system may include a processor, configured to support a satellite node in implementing the foregoing function of the satellite node, for example, processing data and/or a message in the foregoing communication methods. Optionally, the chip system may further include a memory. The memory may be configured to store a program instruction and data that are necessary for the satellite node. Further optionally, the chip system may include a chip, or may include a chip and another discrete device.

The method or algorithm steps described with reference to the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the satellite node. Certainly, the processor and the storage medium may alternatively exist in the satellite node as discrete components.

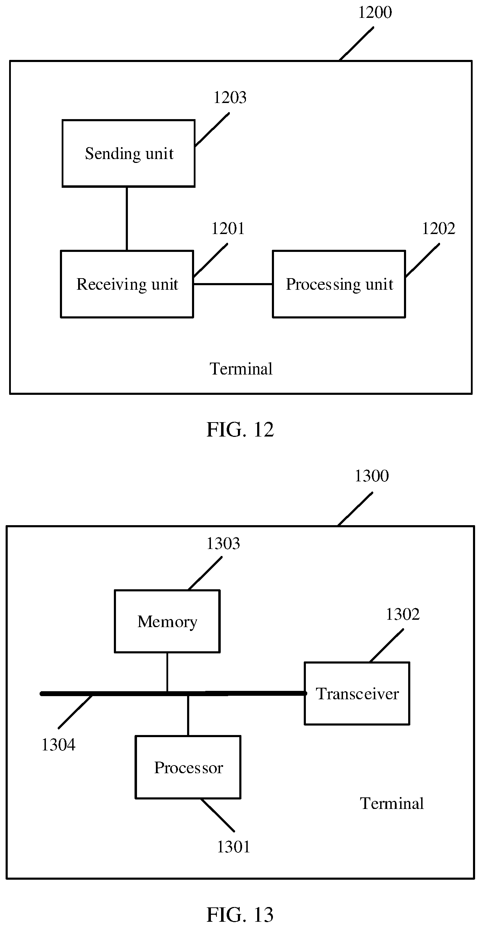

FIG. 12 is a possible schematic structural diagram of a terminal in the foregoing embodiments. Referring to FIG. 12, the terminal 800 may include a receiving unit 1201 and a processing unit 1202. These units may perform corresponding functions of the terminal in the foregoing method examples. For example, the receiving unit 1201 is configured to receive first area identity list information sent by a core network node, where the first area identity list information includes at least one first area identity, the at least one first area identity is determined based on orbit information of a satellite node, and the first area identity is used for access or mobility management of the terminal.

The processing unit 1202 is configured to trigger an area update procedure based on the first area identity list information and an area identity that is broadcast by the satellite node and that is received by the terminal.

Optionally, the orbit information includes any one or more of coverage capability information, time information, and orbit information. The coverage capability information includes any one or more of a transmit power, an antenna tilt, a coverage radius, and geographical coverage information on the surface of the earth at different time points. The time information includes time required for orbiting the earth for one circle. The orbit information includes an orbit height.

Optionally, the first area identity list information further includes time period information corresponding to the at least one first area identity, and the time period information is used to indicate a valid time period of each of the at least one first area identity.

Optionally, the time period information corresponding to the at least one first area identity includes at least one group of time period information, and the at least one group of time period information includes a start time point and an end time point. Alternatively, the time period information corresponding to the at least one first area identity includes a timer information corresponding to the valid time period of each first area identity.

Optionally, the terminal may further include a sending unit 1203.

The receiving unit 1201 is further configured to receive a broadcast message from a satellite node, where the broadcast message includes an area identity of the satellite node.

The sending unit 1203 is configured to: when the area identity of the satellite node is different from the at least one first area identity included in the first area identity list information, send an update message to the core network node, where the update message is used to indicate that the terminal moves out of an area corresponding to the first area identity list information.

Optionally, the terminal may further include a sending unit 1203.

The receiving unit 1201 is further configured to receive a broadcast message from a satellite node, where the broadcast message includes an area identity of the satellite node.

The sending unit 1203 may be configured to: when the area identity of the satellite node is different from a second area identity, send an update message to the core network node. The second area identity is a first area identity that corresponds to time period information matching a current time and that is in the at least one first area identity. Alternatively, the second area identity is a first area identity that is in the at least one first area identity and whose timer is started. The update message is used to indicate that the terminal moves out of an area corresponding to the first area identity list information.

It may be understood that, in this embodiment of the present invention, division into the units is merely an example, and is merely logical function division. During actual implementation, another division manner may be used. Functional units in this embodiment of the present invention may be integrated into one unit, or each of the units may exist alone physically, or two or more units are integrated into one unit. The integrated unit may be implemented in a form of hardware, or may be implemented in a form of a software functional unit.

Optionally, the terminal may implement, by using the foregoing units, some or all of the steps performed by the terminal in the communication methods in the embodiments shown in FIG. 4 to FIG. 7. It should be understood that this embodiment of the present invention is an apparatus embodiment corresponding to a method embodiment, and the descriptions of the method embodiment are also applicable to this embodiment of the present invention.

Referring to FIG. 13, in another embodiment, the terminal 1300 may include a processor 1301 and a transceiver 1302. Optionally, the terminal may further include a memory 1303. The processor 1301, the transceiver 1302, and the memory 1303 may be connected to each other. For example, the processor 1301, the transceiver 1302, and the memory 1303 may be connected to each other through a bus 1304. The bus 1304 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 13, but this does not mean that there is only one bus or only one type of bus.

The processor 1301 may be a processor or a controller, for example, may be a central processing unit (Central Processing Unit, CPU for short), a general purpose processor, a digital signal processor (Digital Signal Processor, DSP for short), an application-specific integrated circuit (Application-Specific Integrated Circuit, ASIC for short), a field programmable gate array (Field Programmable Gate Array, FPGA for short) or another programmable logic device, a transistor logic device, or a hardware component, or any combination thereof. The processor 1301 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver 1302 may include an independent receiver and an independent transmitter, or may be obtained by integrating the receiver and the transmitter.

The processor 1301 is configured to control and manage an action of the terminal. For example, the processor 1301 is configured to support the terminal in determining whether to trigger an area update procedure, and monitor paging, and/or is configured to perform another process of the technology described in this specification. The transceiver 1302 may perform a communication function, to support communication between the terminal and another network entity, for example, communication between the terminal and a functional unit or a network entity such as a satellite node or a core network node shown in FIG. 4 to FIG. 7. Specifically, the processor 1301 is configured to determine to receive or send a signal, and is a controller of a communication function. To be specific, when receiving or sending a signal, the processor 1301 controls or drives the transceiver 1302 to perform related receiving or sending. The transceiver 1302 may implement a specific communication operation under control of the processor 1301, and is an executor of a communication function.

Further, the memory 1303 may be configured to store at least one of program code and data of the terminal. When the processor 1301, for example, a CPU, a DSP, or a microcontroller, works under driving of software, the processor 1301 may read the program code stored in the memory 1303 and work under driving of the program code. For example, the processor 1301 may read the program code stored in the memory 1303, to perform some or all of the steps performed by the terminal in FIG. 4 to FIG. 7. Details are not described herein again.

This application further provides a chip system. The chip system may include a processor, configured to support a terminal in implementing the foregoing function of the foregoing terminal, for example, processing data and/or a message in the foregoing communication methods. Optionally, the chip system may further include a memory. The memory may be configured to store a program instruction and data that are necessary for the terminal. Further optionally, the chip system may include a chip, or may include a chip and another discrete device.

The method or algorithm steps described with reference to the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the terminal. Certainly, the processor and the storage medium may alternatively exist in the terminal as discrete components.

This application further provides a communications system. The system includes the foregoing core network node, the satellite node, the ground receiving station, and/or the terminal. Optionally, the system may further include another device that interacts with the foregoing device in the solutions provided in the embodiments of the present invention.

In an implementation process, steps in the foregoing methods can be implemented by using a hardware integrated logic circuit in a processor, or by using instructions in a form of software. The steps of the method disclosed with reference to the embodiments of this application may be directly performed and accomplished by a hardware processor, or may be performed and accomplished by a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in a memory, and the processor reads information in the memory and accomplishes the steps in the foregoing methods in combination with the hardware of the processor. To avoid repetition, details are not described herein.

It should further be understood that the "first", "second", "third" and various digital numbers in this specification are merely for differentiation for ease of description, and are not intended to limit the scope of the embodiments of the present invention.

It should be understood that the term "and/or" in this specification describes only an association relationship between associated objects and indicate that three relationships may exist. For example, A and/or B may indicate the following three cases: Only A exists, both A and B exist, and only B exists. In addition, the character "/" in this specification generally indicates an "or" relationship between the associated objects.

It should be understood that in various embodiments of this application, sequence numbers of the foregoing processes do not mean execution sequences. The execution sequences of the processes should be determined based on functions and internal logic of the processes, and should not be construed as any limitation on the implementation processes of the embodiments of the present invention.

A person of ordinary skill in the art may be aware that illustrative logical blocks (illustrative logical block) and steps (step) described with reference to the embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A communication method, comprising:
receiving, by a core network node, a first message, wherein the first message comprises orbit information of a satellite node; and
determining, by the core network node, first area identity list information based on the orbit information, and sending the first area identity list information to a terminal, wherein the first area identity list information comprises at least one first area identity, and the first area identity is used for access or mobility management of the terminal.

2. The method according to claim 1, wherein the orbit information comprises at least one of coverage capability information, time information, and orbit information; the coverage capability information comprises at least one of a transmit power, an antenna tilt, a coverage radius, and geographical coverage information on the surface of the earth at different time points; the time information comprises time required for orbiting the earth for one circle; and the orbit information comprises an orbit height.

3. The method according to claim 1, wherein the first area identity list information further comprises time period information corresponding to the at least one first area identity, and the time period information is used to indicate a valid time period of each of the at least one first area identity.

4. The method according to claim 3, wherein the time period information corresponding to the at least one first area identity comprises at least one group of time period information, and the at least one group of time period information comprises a start time point and an end time point; or
the time period information corresponding to the at least one first area identity comprises timer information corresponding to the valid time period of each first area identity.

5. The method according to any one of claims 1 to 4, wherein the satellite node is a distributed unit, and the receiving, by a core network node, a first message comprises:
receiving, by the core network node, the first message from a ground receiving station, wherein the first message is sent after the ground receiving station receives a second message that carries the orbit information and that is sent by the satellite node, and the ground receiving station has a function of a central unit.

6. The method according to any one of claims 1 to 4, wherein the satellite node is configured with a full base station function, and the receiving, by a core network node, a first message comprises:
receiving, by the core network node, the first message from the satellite node.

7. A communication method, comprising:
generating, by a satellite node, a first message or a second message, wherein the first message or the second message comprises orbit information of the satellite node; and
sending, by the satellite node, the first message or the second message.

8. The method according to claim 7, wherein the satellite node is a distributed unit, and the sending, by the satellite node, the first message or the second message comprises:
sending, by the satellite node, the second message to a ground receiving station, wherein the second message comprises the orbit information, so that the ground receiving station sends to a core network node the first message that carries the orbit information, and the ground receiving station has a function of a central unit.

9. The method according to claim 7, wherein the satellite node is configured with a full base station function, and the sending, by the satellite node, the first message or the second message comprises:
sending, by the satellite node, the first message to a core network node, wherein the first message comprises the orbit information.

10. The method according to any one of claims 7 to 9, wherein the orbit information comprises at least one of coverage capability information, time information, and orbit information; the coverage capability information comprises at least one of a transmit power, an antenna tilt, a coverage radius, and geographical coverage information on the surface of the earth at different time points; the time information comprises time required for orbiting the earth for one circle; and the orbit information comprises an orbit height.

11. A communication method, comprising:
receiving, by a terminal, first area identity list information from a core network node, wherein the first area identity list information comprises at least one first area identity, the at least one first area identity is determined based on orbit information of a satellite node, and the first area identity is used for access or mobility management of the terminal; and
triggering, by the terminal, an area update procedure based on the first area identity list information and an area identity that is broadcast by the satellite node and that is received by the terminal.

12. The method according to claim 11, wherein the first area identity list information further comprises time period information corresponding to the at least one first area identity, and the time period information is used to indicate a valid time period of each of the at least one first area identity.

13. The method according to claim 12, wherein the time period information corresponding to the at least one first area identity comprises at least one group of time period information, and the at least one group of time period information comprises a start time point and an end time point; or
the time period information corresponding to the at least one first area identity comprises a timer information corresponding to the valid time period of each first area identity.

14. The method according to any one of claims 11 to 13, wherein the triggering, by the terminal, an area update procedure based on the first area identity list information and an area identity that is broadcast by the satellite node and that is received by the terminal comprises:
receiving, by the terminal, a broadcast message from the satellite node, wherein the broadcast message comprises an area identity of the satellite node; and
when the area identity of the satellite node is different from the at least one first area identity comprised in the first area identity list information, sending, by the terminal, an update message to the core network node, wherein the update message is used to indicate that the terminal moves out of an area corresponding to the first area identity list information.

15. The method according to claim 13, wherein the triggering, by the terminal, an area update procedure based on the first area identity list information and an area identity that is broadcast by the satellite node and that is received by the terminal comprises:
receiving, by the terminal, a broadcast message from the satellite node, wherein the broadcast message comprises an area identity of the satellite node; and
when the area identity of the satellite node is different from a second area identity, sending, by the terminal, an update message to the core network node, wherein the second area identity is a first area identity that corresponds to time period information matching a current time and that is in the at least one first area identity, or the second area identity is a first area identity that is in the at least one first area identity and whose timer is started, and the update message is used to indicate that the terminal moves out of an area corresponding to the first area identity list information.

16. A core network node, comprising a receiving unit, a processing unit, and a sending unit, wherein
the receiving unit is configured to receive a first message, wherein the first message comprises orbit information of a satellite node;
the processing unit is configured to determine first area identity list information based on the orbit information; and
the sending unit is configured to send the first area identity list information to a terminal, wherein the first area identity list information comprises at least one first area identity, and the first area identity is used for access or mobility management of the terminal.

17. The core network node according to claim 16, wherein the orbit information comprises at least one of coverage capability information, time information, and orbit information; the coverage capability information comprises at least one of a transmit power, an antenna tilt, a coverage radius, and geographical coverage information on the surface of the earth at different time points; the time information comprises time required for orbiting the earth for one circle; and the orbit information comprises an orbit height.

18. The core network node according to claim 16, wherein the first area identity list information further comprises time period information corresponding to the at least one first area identity, and the time period information is used to indicate a valid time period of each of the at least one first area identity.

19. The core network node according to claim 18, wherein the time period information corresponding to the at least one first area identity comprises at least one group of time period information, and the at least one group of time period information comprises a start time point and an end time point; or
the time period information corresponding to the at least one first area identity comprises timer information corresponding to the valid time period of each first area identity.

20. The core network node according to any one of claims 16 to 19, wherein the satellite node is a distributed unit; and
the receiving unit is specifically configured to receive the first message from a ground receiving station, wherein the first message is sent after the ground receiving station receives a second message that carries the orbit information and that is sent by the satellite node, and the ground receiving station has a function of a central unit.

21. The core network node according to any one of claims 16 to 19, wherein the satellite node is configured with a full base station function; and
the receiving unit is specifically configured to receive the first message from the satellite node.

22. A satellite node, comprising a processing unit and a sending unit, wherein
the processing unit is configured to generate a first message or a second message, wherein the first message or the second message comprises orbit information of the satellite node; and
the sending unit is configured to send the first message or the second message.

23. The satellite node according to claim 22, wherein the satellite node is a distributed unit; and
the sending unit is specifically configured to send the second message to a ground receiving station, wherein the second message comprises the orbit information, so that the ground receiving station sends, to a core network node, the first message that carries the orbit information, and the ground receiving station has a function of a central unit.

24. The satellite node according to claim 22, wherein the satellite node is configured with a full base station function; and
the sending unit is specifically configured to send the first message to the core network node, wherein the first message comprises the orbit information.

25. The satellite node according to any one of claims 22 to 24, wherein the orbit information comprises at least one of coverage capability information, time information, and orbit information; the coverage capability information comprises at least one of a transmit power, an antenna tilt, a coverage radius, and geographical coverage information on the surface of the earth at different time points; the time information comprises time required for orbiting the earth for one circle; and the orbit information comprises an orbit height.

26. A terminal, comprising a receiving unit and a processing unit, wherein
the receiving unit is configured to receive first area identity list information from a core network node, wherein the first area identity list information comprises at least one first area identity, the at least one first area identity is determined based on orbit information of a satellite node, and the first area identity is used for access or mobility management of the terminal; and
the processing unit is configured to trigger an area update procedure based on the first area identity list information and an area identity that is broadcast by the satellite node and that is received by the terminal.

27. The terminal according to claim 26, wherein the first area identity list information further comprises time period information corresponding to the at least one first area identity, and the time period information is used to indicate a valid time period of each of the at least one first area identity.

28. The terminal according to claim 27, wherein the time period information corresponding to the at least one first area identity comprises at least one group of time period information, and the at least one group of time period information comprises a start time point and an end time point; or
the time period information corresponding to the at least one first area identity comprises a timer information corresponding to the valid time period of each first area identity.

29. The terminal according to any one of claims 26 to 28, wherein the terminal further comprises a sending unit, wherein
the receiving unit is further configured to receive a broadcast message from the satellite node, wherein the broadcast message comprises an area identity of the satellite node; and
the sending unit is configured to: when the area identity of the satellite node is different from the at least one first area identity comprised in the first area identity list information, send an update message to the core network node, wherein the update message is used to indicate that the terminal moves out of an area corresponding to the first area identity list information.

30. The terminal according to claim 28, wherein the terminal further comprises a sending unit, wherein
the receiving unit is further configured to receive a broadcast message from the satellite node, wherein the broadcast message comprises an area identity of the satellite node; and
the sending unit is configured to: when the area identity of the satellite node is different from a second area identity, send an update message to the core network node, wherein the second area identity is a first area identity that corresponds to time period information matching a current time and that is in the at least one first area identity, or the second area identity is a first area identity that is in the at least one first area identity and whose timer is started, and the update message is used to indicate that the terminal moves out of an area corresponding to the first area identity list information.

31. A computer-readable storage medium, wherein the computer-readable storage medium stores a computer program, the computer program comprises a program instruction, and when the program instruction is executed by a processor, the processor is enabled to perform the method according to any one of claims 1 to 6.

32. A computer-readable storage medium, wherein the computer-readable storage medium stores a computer program, the computer program comprises a program instruction, and when the program instruction is executed by a processor, the processor is enabled to perform the method according to any one of claims 7 to 10.

33. A computer-readable storage medium, wherein the computer-readable storage medium stores a computer program, the computer program comprises a program instruction, and when the program instruction is executed by a processor, the processor is enabled to perform the method according to any one of claims 11 to 15.
